(19) Europäisches Patentamt
European Patent Office
Office européen des brevets

(11) **EP 4 765 934 A1**

(12) **EUROPEAN PATENT APPLICATION**
published in accordance with Art. 153(4) EPC

(43) Date of publication:
**24.06.2026 Bulletin 2026/26**

(21) Application number: **24862025.4**

(22) Date of filing: **05.09.2024**

(51) International Patent Classification (IPC):
**H04W 24/08** (2009.01)

(52) Cooperative Patent Classification (CPC):
**H04B 7/06; H04W 24/08; H04W 64/00**

(86) International application number:
**PCT/CN2024/117060**

(87) International publication number:
**WO 2025/051185 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.09.2023 CN 202311157465**

(71) Applicant: **HUAWEI TECHNOLOGIES CO., LTD.
Shenzhen 518129 (CN)**

(72) Inventors:
• **QIAN, Bin**
**Shenzhen, Guangdong 518129 (CN)**
• **LIU, Chenchen**
**Shenzhen, Guangdong 518129 (CN)**
• **HUANG, Lei**
**Shenzhen, Guangdong 518129 (CN)**
• **PENG, Xiaohui**
**Shenzhen, Guangdong 518129 (CN)**
• **YANG, Xun**
**Shenzhen, Guangdong 518129 (CN)**

(74) Representative: **Maiwald GmbH
Engineering
Elisenhof
Elisenstrasse 3
80335 München (DE)**

(54) **INFORMATION INTERACTION METHOD AND APPARATUS IN UWB SYSTEM**

(57)    This application relates to an information exchange method in a UWB system, and an apparatus. The method includes: sending/receiving sensing control information, and determining a channel based on the sensing control information, where the channel satisfies a predefined condition. This application can be used to complete a sensing solution, for example, sensing measurement based on frequency stitching, and improve sensing performance. This application is applied to a UWB-based WPAN system, a sensing system, or the like, including 802.15 series protocols, for example, 802.15.4ab or a next-generation standard; and may further be applied to a WLAN system with a next-generation protocol (for example, 802.11be, Wi-Fi 7, or EHT) of 802.11ax, a next-generation protocol (for example, Wi-Fi 8, UHR, or 11bn) of 802.11be, Wi-Fi AI, a millimeter wave, or the like.

FIG. 8

## Description

This application claims priority to Chinese Patent Application No. 202311157465.3, filed with the China National Intellectual Property Administration on September 7, 2023 and entitled "INFORMATION EXCHANGE METHOD IN UWB SYSTEM, AND APPARATUS", which is incorporated herein by reference in its entirety.

## TECHNICAL FIELD

This application relates to the field of communication technologies, and in particular, to an information exchange method in an ultra-wideband (ultra-wideband, UWB) system, and an apparatus.

## BACKGROUND

As ultra-wideband (ultra-wideband, UWB) enters the civil field, ultra-wideband (UWB) wireless communication has become one of physical layer technologies for short-range and high-speed wireless networks. An ultra-wideband (UWB) technology is a wireless carrier communication technology that can perform data transmission, for example, by using nanosecond-level non-sinusoidal wave narrow pulses, and therefore, occupies a very wide spectrum range. Due to narrow pulses and low radiation spectrum density, a UWB system has advantages of a strong multipath resolution capability, low power consumption, high confidentiality, and the like, and is mainly used in sensing and ranging scenarios.

The institute of electrical and electronics engineers (institute of electrical and electronics engineers, IEEE) has incorporated the UWB technology into IEEE 802 series wireless standards and has released a high-speed wireless personal area network (wireless personal area network, WPAN) standard IEEE 802.15.4a based on the UWB technology, and an evolved version IEEE 802.15.4z. A next-generation UWB wireless personal area network (WPAN) standard 802.15.4ab is under discussion. One of focuses of 802.15.4ab is use of UWB pulses for sensing. In a sensing application, information such as a distance, an angle, and a speed of a target is extracted by detecting an echo of a UWB signal on the target (target). Sensing performance is directly proportional to an effective bandwidth. In other words, a larger effective bandwidth indicates higher sensing precision. However, limited by performance of an analog-to-digital converter (analog digital converter, ADC), a UWB device with low costs and low power consumption is incapable of processing a large-bandwidth signal. In a possible solution, a plurality of frequency bands with bandwidths of 499.2 MHz (megahertz) are stitched to form a frequency band with a larger bandwidth, to improve sensing performance of the UWB device with low costs and low power consumption.

However, the existing sensing solution is incomplete.

## SUMMARY

Embodiments of this application provide an information exchange method in a UWB system, and an apparatus, to complete a sensing solution, for example, sensing measurement based on frequency stitching, and improve sensing performance.

The following describes this application from different aspects. It should be understood that the following implementations and beneficial effect of different aspects may be mutually referenced.

According to a first aspect, this application provides an information exchange method in a UWB system. The method is applied to a sensing responder (sensing responder). The method includes: receiving sensing control information, where the sensing control information includes a frequency stitching direction field, a base channel field, a carrier frequency grid field, and a number of transmissions field; and determining a channel based on the sensing control information. The frequency stitching direction field may indicate whether a center frequency of a channel for frequency stitching is increased or decreased relative to a center frequency of a base channel, or indicate whether a center frequency of a channel subsequently for frequency stitching is greater than or less than a center frequency of a first channel for frequency stitching. The base channel field may indicate a channel number (channel number) of the base channel. The base channel may be the first channel for frequency stitching. The carrier frequency grid field may indicate a spacing between channels for frequency stitching. A value of the number of transmissions field plus 1 represents a total number of frequency bands (or channels) for frequency stitching.

The channel satisfies:

$$N_i = N_{base} + l_i \times (4 - OF) \times (2 \times D - 1) \text{, or } f_i = f_{base} + 124.8 \times l_i \times (4 - OF) \times (2 \times D - 1) \text{,}$$

where

$N_i$ represents a channel number of a channel corresponding to an ith logical index $l_i$ in a channel use order, $f_i$ represents a

center frequency of a channel corresponding to an $i^{th}$ logical index $l_i$ in a channel use order, a value of $l_i$ ranges from 0 to (M - 1), M represents a total number of frequency bands for frequency stitching indicated by the number of transmissions field, $N_{base}$ represents the channel number of the base channel indicated by the base channel field, $f_{base}$ represents the center frequency of the base channel in MHz (MHz) indicated by the base channel field, the center frequency of the base channel corresponds to the channel number of the base channel, a unit of $f_i$ is MHz, OF represents a value of the carrier frequency grid field, and D represents a value of the frequency stitching direction field.

It may be understood that a logical index corresponding to the base channel is 0.

In this application, a channel use order of an out-of-sequence channel order is associated with an actual UWB channel (for example, a channel number or a center frequency), to complete a sensing solution based on frequency stitching, support sensing measurement based on frequency stitching, and improve sensing performance. In addition, in this application, no additional signaling overhead is required, implementation is simple, and complexity is low.

With reference to the first aspect, in a possible implementation, the sensing control information further includes a channel sequence order field. The channel sequence order field indicates whether channels for frequency stitching are sequentially transmitted (that is, channels are used in an in-sequence order (in-sequence channel order), referred to as an in-sequence channel order for short) or not sequentially transmitted (that is, channels are used in an out-of-sequence order (out-of-sequence channel order), referred to as an out-of-sequence channel order for short) in ascending or descending order of center frequencies.

The channel use order of the out-of-sequence channel order satisfies:

$$\text{CH}(l_i) = \text{CH}((p \times (OF + 1) \text{ MOD } (N)) + (p \times (OF + 1) \text{ DIV } (N))),$$

where
$l_i$ represents the $i^{th}$ logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

With reference to the first aspect, in a possible implementation, after determining the channel based on the sensing control information, the method further includes: sending a channel impulse response (channel impulse response, CIR) report information element (CIR report information element, CIR report IE), where the CIR report IE includes an antennas field, first indication information, and Q receive report fields. One receive report field indicates one CIR report, and the Q receive report fields indicate Q CIR reports in total. A value of the antennas field plus 1 represents a number of antennas corresponding to CIR reports that need to be fed back. The first indication information indicates a number of sensing segments in one sensing packet, or the first indication information indicates a number of sensing segments corresponding to CIR reports that need to be fed back, or the first indication information indicates different numbers of sensing segments corresponding to the CIR reports in the CIR report IE. Q is equal to a product of the number of antennas and the number of sensing segments indicated by the first indication information.

In this application, a structure of the sensing packet is considered in the CIR report IE, to complete a CIR feedback solution.

For example, an arrangement order of CIR reports in the CIR report IE includes: first traversing a CIR report corresponding to an antenna and then traversing a CIR report corresponding to a sensing segment; or first traversing a CIR report corresponding to a sensing segment and then traversing a CIR report corresponding to an antenna.

This application clearly defines an appearance order of the CIR reports in the CIR report IE, to help support sensing measurement and improve sensing performance. In addition, in a frequency stitching scenario, different sensing segments (SENS segments) or different sensing packets may be sent on different center frequencies (or frequencies or channels), and one sensing measurement requires CIRs of a plurality of sensing segments or a plurality of sensing packets. A CIR report corresponding to a sensing segment is first traversed and then a CIR report corresponding to an antenna is traversed, so that the CIR reports required for one sensing measurement can be placed together, thereby facilitating subsequent processing.

For example, the appearance order of the CIR reports in the CIR report IE may be predefined in a standard or may be by default. In this way, implementation is simple, complexity is low, and no additional signaling overhead is required.

For example, the appearance order of the CIR reports in the CIR report IE may be determined through negotiation between a receiver and a transmitter. In this way, the arrangement order of the CIR reports is more flexible.

For example, the appearance order of the CIR reports in the CIR report IE may be preconfigured, or may be indicated by a sensing responder/sensing initiator. For example, the CIR report IE carries second indication information indicating the arrangement order of the CIR reports in the CIR report IE. Alternatively, second indication information is received or sent, to indicate the arrangement order of the CIR reports in the CIR report IE. In this way, the appearance order of the CIR reports in the CIR report IE can be set, and is more flexible.

According to a second aspect, this application provides an information exchange method in a UWB system. The method is applied to a sensing initiator (sensing initiator). The method includes: sending sensing control information, where the sensing control information includes a frequency stitching direction field, a base channel field, a carrier frequency grid field, and a number of transmissions field; and determining a channel based on the sensing control information. For descriptions of the frequency stitching direction field, the base channel field, the carrier frequency grid field, and the number of transmissions field, refer to the related descriptions in the first aspect. Details are not described herein.

The channel satisfies:

$$N_i = N_{base} + l_i \times (4 - OF) \times (2 \times D - 1) \text{, or } f_i = f_{base} + 124.8 \times l_i \times (4 - OF) \times (2 \times D - 1),$$

where

$N_i$ represents a channel number of a channel corresponding to an $i^{th}$ logical index $l_i$ in a channel use order, $f_i$ represents a center frequency of a channel corresponding to an $i^{th}$ logical index $l_i$ in a channel use order, a value of $l_i$ ranges from 0 to (M - 1), M represents a total number of frequency bands for frequency stitching indicated by the number of transmissions field, $N_{base}$ represents a channel number of a base channel indicated by the base channel field, $f_{base}$ represents a center frequency of a base channel in MHz (MHz) indicated by the base channel field, the center frequency of the base channel corresponds to the channel number of the base channel, a unit of $f_i$ is MHz, OF represents a value of the carrier frequency grid field, and D represents a value of the frequency stitching direction field.

It may be understood that a logical index corresponding to the base channel is 0.

With reference to the second aspect, in a possible implementation, the sensing control information further includes a channel sequence order field. The channel sequence order field indicates whether channels for frequency stitching are sequentially transmitted (that is, channels are used in an in-sequence order, referred to as in-sequence channel order for short) or not sequentially transmitted (that is, channels are used in an out-of-sequence order, referred to as an out-of-sequence channel order for short) in ascending or descending order of center frequencies.

The channel use order of the out-of-sequence channel order satisfies:

$$CH(l_i) = CH((p \times (OF + 1) \text{ MOD } (N)) + (p \times (OF + 1) \text{ DIV } (N))),$$

where

$l_i$ represents the $i^{th}$ logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

With reference to the second aspect, in a possible implementation, after determining the channel based on the sensing control information, the method further includes: receiving a CIR report IE, where the CIR report IE includes an antennas field, first indication information, and Q receive report fields, and one receive report field indicates one CIR report; and processing the CIR report IE to obtain Q CIR reports. The Q receive report fields indicate Q CIR reports in total. A value of the antennas field plus 1 represents a number of antennas corresponding to CIR reports that need to be fed back. The first indication information indicates a number of sensing segments in one sensing packet, or the first indication information indicates a number of sensing segments corresponding to CIR reports that need to be fed back, or the first indication information indicates different numbers of sensing segments corresponding to the CIR reports in the CIR report IE. Q is equal to a product of the number of antennas and the number of sensing segments indicated by the first indication information.

For example, an arrangement order of CIR reports in the CIR report IE includes: first traversing a CIR report corresponding to an antenna and then traversing a CIR report corresponding to a sensing segment; or first traversing a CIR report corresponding to a sensing segment and then traversing a CIR report corresponding to an antenna.

For example, an appearance order of the CIR reports in the CIR report IE may be predefined in a standard or may be by default. In this way, implementation is simple, complexity is low, and no additional signaling overhead is required.

For example, the appearance order of the CIR reports in the CIR report IE may be determined through negotiation between a receiver and a transmitter. In this way, the arrangement order of the CIR reports is more flexible.

For example, the appearance order of the CIR reports in the CIR report IE may be preconfigured, or may be indicated by a sensing responder/sensing initiator. For example, the CIR report IE carries second indication information indicating the arrangement order of the CIR reports in the CIR report IE. Alternatively, second indication information is sent or received, to indicate the arrangement order of the CIR reports in the CIR report IE. In this way, the appearance order of the CIR reports in the CIR report IE can be set, and is more flexible.

According to a third aspect, this application provides a communication apparatus. The communication apparatus is configured to perform the method according to any one of the first aspect or the possible implementations of the first aspect. The communication apparatus includes a unit for performing the method according to any one of the first aspect or the possible implementations of the first aspect.

According to a fourth aspect, this application provides a communication apparatus. The communication apparatus is configured to perform the method according to any one of the second aspect or the possible implementations of the second aspect. The communication apparatus includes a unit for performing the method according to any one of the second aspect or the possible implementations of the second aspect.

In the third aspect or the fourth aspect, the communication apparatus may include a transceiver unit and a processing unit. For detailed descriptions of the transceiver unit and the processing unit, refer to apparatus embodiments provided below. For beneficial effect of the third aspect and the fourth aspect, refer to the related descriptions of the first aspect and the second aspect. Details are not described herein again.

According to a fifth aspect, this application provides an information exchange method in a UWB system. The method is applied to a sensing or ranging scenario. For example, the method is applied to a sensing receiver (sensing receiver). The method includes: generating a CIR report IE, and sending the CIR report IE. The CIR report IE includes an antennas field, first indication information, and Q receive report fields. One receive report field indicates one CIR report, and the Q receive report fields indicate Q CIR reports in total. A value of the antennas field plus 1 represents a number of antennas corresponding to CIR reports that need to be fed back. The first indication information indicates a number of sensing segments in one sensing packet, or the first indication information indicates a number of sensing segments corresponding to CIR reports that need to be fed back. Q is equal to a product of the number of antennas and the number of sensing segments indicated by the first indication information.

In this application, CIRs of different antennas and different sensing segments are considered, the first indication information is added to the CIR report IE, to indicate the number of sensing segments in one sensing packet or the number of sensing segments corresponding to CIR reports that need to be fed back. This can complete a CIR feedback solution and a sensing solution.

With reference to the fifth aspect, in a possible implementation, an arrangement order of CIR reports in the CIR report IE includes: first traversing a CIR report corresponding to an antenna and then traversing a CIR report corresponding to a sensing segment; or first traversing a CIR report corresponding to a sensing segment and then traversing a CIR report corresponding to an antenna.

This application clearly defines an appearance order of the CIR reports in the CIR report IE, to help support sensing measurement and improve sensing performance. In addition, in a frequency stitching scenario, different sensing segments (SENS segments) or different sensing packets may be sent on different center frequencies (or frequencies or channels), and one sensing measurement requires CIRs of a plurality of sensing segments or a plurality of sensing packets. A CIR report corresponding to a sensing segment is first traversed and then a CIR report corresponding to an antenna is traversed, so that the CIR reports required for one sensing measurement can be placed together, thereby facilitating subsequent processing.

For example, the appearance order of the CIR reports in the CIR report IE may be predefined in a standard or may be by default. In this way, implementation is simple, complexity is low, and no additional signaling overhead is required.

For example, the appearance order of the CIR reports in the CIR report IE may be determined through negotiation between a receiver and a transmitter. In this way, the arrangement order of the CIR reports is more flexible.

For example, the appearance order of the CIR reports in the CIR report IE may be preconfigured, or may be indicated by a sensing responder/sensing initiator. For example, the CIR report IE carries second indication information indicating the arrangement order of the CIR reports in the CIR report IE. Alternatively, second indication information is received or sent, to indicate the arrangement order of the CIR reports in the CIR report IE. In this way, the appearance order of the CIR reports in the CIR report IE can be set, and is more flexible.

According to a sixth aspect, this application provides an information exchange method in a UWB system. The method is applied to a sensing or ranging scenario. For example, the method is applied to a sensing transmitter (sensing transmitter). The method includes: receiving a CIR report IE, where the CIR report IE includes an antennas field, first indication information, and Q receive report fields, and one receive report field indicates one CIR report; and processing the CIR report IE to obtain Q CIR reports. The Q receive report fields indicate Q CIR reports in total. A value of the antennas field plus 1 represents a number of antennas corresponding to CIR reports that need to be fed back. The first indication information indicates a number of sensing segments in one sensing packet, or the first indication information indicates a number of sensing segments corresponding to CIR reports that need to be fed back. Q is equal to a product of the number of antennas and the number of sensing segments indicated by the first indication information.

With reference to the sixth aspect, in a possible implementation, an arrangement order of CIR reports in the CIR report IE includes: first traversing a CIR report corresponding to an antenna and then traversing a CIR report corresponding to a sensing segment; or first traversing a CIR report corresponding to a sensing segment and then traversing a CIR report corresponding to an antenna.

For example, an appearance order of the CIR reports in the CIR report IE may be predefined in a standard or may be by default. In this way, implementation is simple, complexity is low, and no additional signaling overhead is required.

For example, the appearance order of the CIR reports in the CIR report IE may be determined through negotiation between a receiver and a transmitter. In this way, the arrangement order of the CIR reports is more flexible.

For example, the appearance order of the CIR reports in the CIR report IE may be preconfigured, or may be indicated by a sensing responder/sensing initiator. For example, the CIR report IE carries second indication information indicating the arrangement order of the CIR reports in the CIR report IE. Alternatively, second indication information is sent or received, to indicate the arrangement order of the CIR reports in the CIR report IE. In this way, the appearance order of the CIR reports in the CIR report IE can be set, and is more flexible.

According to a seventh aspect, this application provides a communication apparatus. The communication apparatus is configured to perform the method according to any one of the fifth aspect or the possible implementations of the fifth aspect. The communication apparatus includes a unit for performing the method according to any one of the fifth aspect or the possible implementations of the fifth aspect.

According to an eighth aspect, this application provides a communication apparatus. The communication apparatus is configured to perform the method according to any one of the sixth aspect or the possible implementations of the sixth aspect. The communication apparatus includes a unit for performing the method according to any one of the sixth aspect or the possible implementations of the sixth aspect.

In the seventh aspect or the eighth aspect, the communication apparatus may include a transceiver unit and a processing unit. For detailed descriptions of the transceiver unit and the processing unit, refer to apparatus embodiments provided below. For beneficial effect of the seventh aspect and the eighth aspect, refer to related descriptions of the fifth aspect and the sixth aspect. Details are not described herein again.

According to a ninth aspect, this application provides a communication apparatus. The communication apparatus includes a processor, configured to perform the method according to any one of the first aspect, the second aspect, the fifth aspect, the sixth aspect, or the possible implementations of the aspects. Alternatively, the processor is configured to execute a program stored in a memory. When the program is executed, the method according to any one of the first aspect, the second aspect, the fifth aspect, the sixth aspect, or the possible implementations of the aspects is performed.

With reference to the ninth aspect, in a possible implementation, the memory is located outside the communication apparatus.

With reference to the ninth aspect, in a possible implementation, the memory is located inside the communication apparatus.

In this application, the processor and the memory may alternatively be integrated into one component. In other words, the processor and the memory may alternatively be integrated together.

With reference to the ninth aspect, in a possible implementation, the communication apparatus further includes a transceiver. The transceiver is configured to send or receive sensing control information or CIR report information element.

According to a tenth aspect, this application provides a communication apparatus. The communication apparatus may include a processor and an interface circuit, and the processor is connected to the interface circuit. The interface circuit is configured to exchange (or transmit/receive, or input/output) information or data, and the processor is configured to run program instructions, so that the communication apparatus performs the method according to any one of the first aspect, the second aspect, the fifth aspect, the sixth aspect, or the possible implementations of the aspects. The interface circuit may be a communication interface or a transceiver. The transceiver may be a radio frequency module in the communication apparatus, a combination of a radio frequency module and an antenna, or an input/output interface of a chip or a circuit.

According to an eleventh aspect, this application provides a readable storage medium. The readable storage medium stores program instructions, and when the program instructions are run on a computer, the computer is enabled to perform the method according to any one of the first aspect, the second aspect, the fifth aspect, the sixth aspect, or the possible implementations of the aspects.

According to a twelfth aspect, this application provides a program product including program instructions. When the program product runs, the method according to any one of the first aspect, the second aspect, the fifth aspect, the sixth aspect, or the possible implementations of the aspects is performed.

According to a thirteenth aspect, this application provides an apparatus. The apparatus may be implemented in a form of a chip, or may be in a form of a device. The apparatus includes a processor. The processor is configured to read and execute a program stored in a memory, to perform the information exchange method in the UWB system according to one or more of the first aspect, the second aspect, the fifth aspect, and the sixth aspect, or one or more of the possible implementations of the aspects. Optionally, the apparatus further includes a memory, and the memory is connected to the processor through a circuit. Further, optionally, the apparatus further includes a communication interface, and the processor is connected to the communication interface. The communication interface is configured to receive to-be-processed information. The processor obtains the information from the communication interface, processes the information, and outputs a processing result through the communication interface. The communication interface may be an input/output interface.

In a possible implementation, the processor and the memory may be physically independent units, or the memory may be integrated with the processor.

According to a fourteenth aspect, this application provides a communication system. The communication system includes a first communication apparatus and a second communication apparatus. The first communication apparatus is configured to perform the method according to any one of the first aspect, the fifth aspect, or the possible implementations of the aspects, and the second communication apparatus is configured to perform the method according to any one of the second aspect, the sixth aspect, or the possible implementations of the aspects.

For technical effect achieved in the foregoing aspects, refer to each other or refer to beneficial effect in the method embodiment described below. Details are not repeated herein.

## BRIEF DESCRIPTION OF DRAWINGS

FIG. 1 is a diagram of a structure of a wireless communication system according to an embodiment of this application;
FIG. 2 is a diagram of another structure of a wireless communication system according to an embodiment of this application;
FIG. 3a is a diagram of a possible scheduling manner of frequency stitching according to an embodiment of this application;
FIG. 3b is a diagram of another possible scheduling manner of frequency stitching according to an embodiment of this application;
FIG. 3c is a diagram of another possible scheduling manner of frequency stitching according to an embodiment of this application;
FIG. 4 is a diagram of a frame format of sensing control information according to an embodiment of this application;
FIG. 5 is a diagram of a frame format of a frequency stitching parameters field according to an embodiment of this application;
FIG. 6 is a diagram of an out-of-sequence channel order according to an embodiment of this application;
FIG. 7 is a diagram of an in-sequence channel order according to an embodiment of this application;
FIG. 8 is a schematic flowchart of an information exchange method in a UWB system according to an embodiment of this application;
FIG. 9 is a diagram of a frame format of a CIR report information element according to an embodiment of this application;
FIG. 10 is a diagram of a frame format of a receive report field according to an embodiment of this application;
FIG. 11 is a diagram of a PPDU format according to an embodiment of this application;
FIG. 12 is a diagram of a structure of a sensing field according to an embodiment of this application;
FIG. 13 is another schematic flowchart of an information exchange method in a UWB system according to an embodiment of this application;
FIG. 14 is a diagram of another frame format of a CIR report information element according to an embodiment of this application;
FIG. 15 is a diagram of CIRs corresponding to different antennas and different SENS segments according to an embodiment of this application;
FIG. 16 is a diagram of a structure of a communication apparatus according to an embodiment of this application;
FIG. 17 is a diagram of another structure of a communication apparatus according to an embodiment of this application; and
FIG. 18 is a diagram of another structure of a communication apparatus according to an embodiment of this application.

## DESCRIPTION OF EMBODIMENTS

The following clearly and completely describes technical solutions in embodiments of this application with reference to the accompanying drawings in embodiments of this application.

In descriptions of this application, words such as "first" and "second" are merely used to distinguish between different objects, and do not limit numbers and execution sequences. In addition, the words such as "first" and "second" do not indicate a definite difference. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

In the descriptions of this application, "at least one (item) "means one or more, "a plurality of" means two or more, and "at least two (items)" means two, three, or more. In addition, "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "One or more of the following" or a similar expression thereof means any combination of these items. For example, one or more of the following: a, b, or c, may represent: a, b, c, a and b, a and c, b and c, or a, b, and c.

In this application, a word like "example" or "for example" is used to represent giving an example, an illustration, or a description. Any embodiment or design scheme described as "example", "such as" or "for example" in this application should not be explained as being more preferred or having more advantages than another embodiment or design scheme. Exactly, use of the word "example", "such as", "for example", or the like is intended to present a related concept in a specific manner.

In the description of this application, both "when" and "if" mean that an apparatus performs corresponding processing in an objective situation, are not intended to limit time, do not require the apparatus to necessarily have a determining action during implementation, and do not mean another limitation.

In this application, unless otherwise specified, an element indicated in a singular form is intended to indicate "one or more", but does not indicate "one and only one".

In embodiments of this application, "A corresponds to B", "B corresponding to A", or a similar expression indicates that B is associated with A, and B may be determined based on A. Determining B based on A does not mean that B is determined based only on A, and B may alternatively be determined based on A and/or other information.

The technical solutions provided in this application may be applicable to a wireless personal area network (wireless personal area network, WPAN) based on a UWB technology. For example, a method provided in this application may be applicable to IEEE 802.15 series protocols, for example, an 802.15.4a protocol, an 802.15.4z protocol, or an 802.15.4ab protocol, or a future generation UWB WPAN standard. Examples are not enumerated herein. The method provided in this application may be further applied to various communication systems, such as an internet of things (internet of things, IoT) system, vehicle-to-everything (vehicle to X, V2X), and a narrowband internet of things (narrowband internet of things, NB-IoT) system, or is applied to a device in vehicle-to-everything, an internet of things node, a sensor, or the like in the internet of things (IoT, internet of things), a smart camera, a smart remote control, and a smart water or electricity meter in a smart home, a sensor in a smart city, and the like. The method provided in this application is further applicable to a long term evolution (long term evolution, LTE) frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, an LTE system, a 5th-generation (5th-generation, 5G) communication system, a 6th-generation (6th-generation, 6G) communication system, and the like.

A UWB technology is a new wireless communication technology that can perform data transmission by using nanosecond-level non-sinusoidal wave narrow pulses, perform modulation on an impulse with very steep rise and fall time, and therefore, occupies a very wide spectrum range for transmission, so that a signal has a bandwidth of a Giga Hertz (GHz) magnitude. A bandwidth used by UWB is usually higher than 500 MHz. A UWB system does not need to generate a sinusoidal carrier signal and may directly transmit an impulse sequence. Therefore, the UWB system has a wide spectrum and low average power. The UWB wireless communication system has advantages of a strong multipath resolution capability, low power consumption, high confidentiality, and the like. This facilitates coexistence with other systems, and improves spectrum utilization and system capacity. In addition, in a short-range communication application, transmit power of a UWB transmitter may be usually lower than 1 mW (milliwatt). Theoretically, interference generated by a UWB signal is only equivalent to white noise. This facilitates good coexistence between ultra-wideband and narrowband communication. Therefore, both the UWB system and a narrowband (narrowband, NB) communication system can operate without interfering with each other. The method provided in this application may be implemented by a communication apparatus in a wireless communication system. In a communication apparatus, an apparatus or a chip for implementing a function of a UWB system may be referred to as a UWB module, and an apparatus or a chip for implementing a function of a narrowband communication system may be referred to as a narrowband communication module. The UWB module and the narrowband communication module may be different apparatuses or chips. Certainly, the UWB module and the narrowband communication module may alternatively be integrated into one apparatus or chip. Implementations of the UWB module and the narrowband communication module in the communication apparatus are not limited in embodiments of this application. The communication apparatus in this application includes a UWB module, and may further include a narrowband communication module.

Although embodiments of this application are mainly described by using a WPAN as an example, for example, a network used in IEEE 802.15 series standards is used as an example for description. A person skilled in the art easily understands that, various aspects in this application may be extended to another network using various standards or protocols, for example, a wireless local area network (wireless local area network, WLAN), Bluetooth (BLUETOOTH), a high performance radio LAN (high performance radio LAN, HIPERLAN) (a wireless standard similar to an IEEE 802.11 standard, mainly used in Europe), a wide area network (WAN), or another network known now or developed in the future. Therefore, regardless of used coverage and a used wireless access protocol, various aspects provided in this application are applicable to any appropriate wireless network.

Optionally, the communication apparatus in embodiments of this application may be a device that supports a plurality of WPAN standards, such as 802.15.4a, 802.15.4z, 802.15.4ab under discussion, or a subsequent release.

For example, the method provided in this application may be implemented by a communication apparatus in a wireless communication system, and the communication apparatus may be an apparatus in a UWB system. For example, the communication apparatus may include but is not limited to a communication server, a router, a switch, a bridge, a computer, a mobile phone, and the like that support a UWB technology. For another example, the communication apparatus may include user equipment (user equipment, UE). The user equipment may include various devices that support the UWB technology, such as a handheld device, a vehicle-mounted device (for example, a vehicle or a component mounted in a vehicle), a wearable device, an internet of things (internet of things, IoT) device, a computing device, or another processing device connected to a wireless modem. Examples are not enumerated herein. For another example, the communication apparatus may include a central control point, for example, a personal area network (personal area network, PAN) or a PAN coordinator. The PAN coordinator or the PAN may be a mobile phone, a vehicle-mounted device, an anchor (Anchor), a tag (tag), a smart home, or the like. For another example, the communication apparatus may include a chip, and the chip may be disposed in a communication server, a router, a switch, a terminal device, or the like. Examples are not enumerated herein.

In embodiments of this application, the communication apparatus may include a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application.

It may be understood that the foregoing descriptions of the communication apparatus are applicable to any communication apparatus in embodiments of this application.

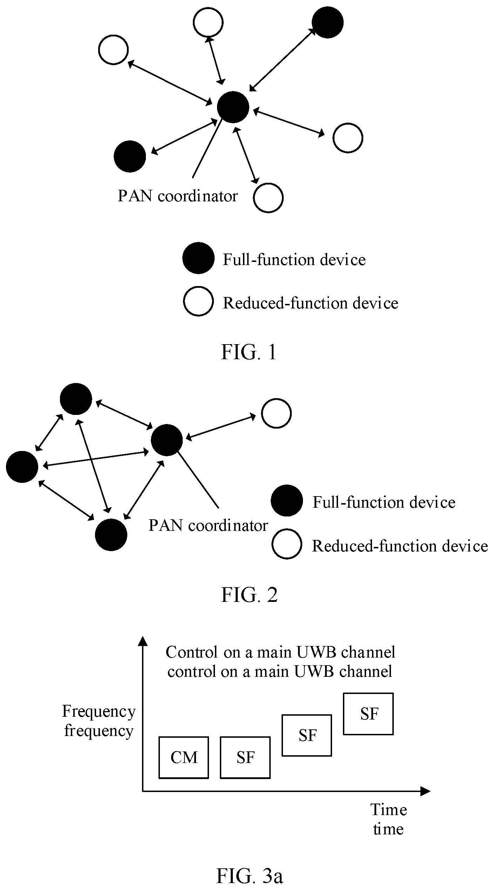

For example, FIG. 1 is a diagram of a structure of a wireless communication system according to an embodiment of this application. As shown in FIG. 1, the wireless communication system is a star topology structure. In this structure, a central control node (for example, a PAN coordinator in FIG. 1) may perform data communication with one or more other devices. FIG. 2 is a diagram of another structure of a wireless communication system according to an embodiment of this application. As shown in FIG. 2, the wireless communication system is a point-to-point topology structure. In this structure, a central control node (for example, a PAN coordinator in FIG. 2) may perform data communication with one or more other devices, and other different devices may also perform data communication with each other. In FIG. 1 and FIG. 2, both a full-function device (full-function device) and a reduced-function device (reduced-function device) may be understood as communication apparatuses shown in this application. The full-function device is relative to the reduced-function device. For example, the reduced-function device cannot be a PAN coordinator (coordinator). For another example, compared with the full-function device, the reduced-function device may have no coordination capability or have a lower communication rate than the full-function device. It may be understood that the PAN coordinator shown in FIG. 2 is merely an example, and each of the other three full-function devices shown in FIG. 2| may alternatively serve as a PAN coordinator. Examples are not enumerated herein. It may be further understood that the full-function device and the reduced-function device in this application are merely examples of the communication apparatus, and any apparatus that can implement a PPDU transmission method based on frequency stitching provided in this application falls within the protection scope of this application.

Currently, limited by performance of an ADC, most UWB devices are incapable of processing a large-bandwidth signal. Sensing performance is directly proportional to an effective bandwidth. That is, a larger effective bandwidth indicates higher sensing precision. Therefore, to improve sensing performance of a UWB device, a possible solution is implemented through frequency stitching. Frequency stitching may be briefly described as follows: A transmitter transmits a plurality of sensing fragments (sensing fragments) on a plurality of different frequency bands, where different sensing fragments (SFs) may be transmitted on different frequency bands. A receiver separately receives the sensing fragments (SFs) on these frequency bands, and performs sensing measurement based on the received plurality of sensing fragments (SFs). This is equivalent to stitching the plurality of frequency bands, and performing sensing measurement on a frequency band obtained through stitching.

From a time dimension, frequency stitching may be classified into two types. One type is intra-packet frequency stitching, that is, different parts in one sensing physical layer protocol data unit (physical layer protocol data unit, PPDU) are transmitted on different UWB channels (or frequency bands). The other type is inter-packet frequency stitching, that is, a plurality of different sensing PPDUs are transmitted on different UWB channels (or frequency bands).

In this application, a "sensing PPDU" may be referred to as a "sensing packet", and the two may be used interchangeably. The "sensing PPDU (or sensing packet)" may be understood as a PPDU (or packet) for sensing measurement, or a PPDU (or packet) including a sensing field (sensing field). It may be understood that the "PPDU for sensing measurement" does not mean that the PPDU is only for sensing measurement. Certainly, the PPDU may be further used to implement another function. This is not limited in this application.

In a possible implementation, for inter-packet frequency stitching, one sensing fragment (SF) may represent one or more PPDUs. For intra-packet frequency stitching, one sensing fragment (SF) may represent one or more sensing segments (SENS segments) in one PPDU.

The following describes several possible scheduling manners of frequency stitching.

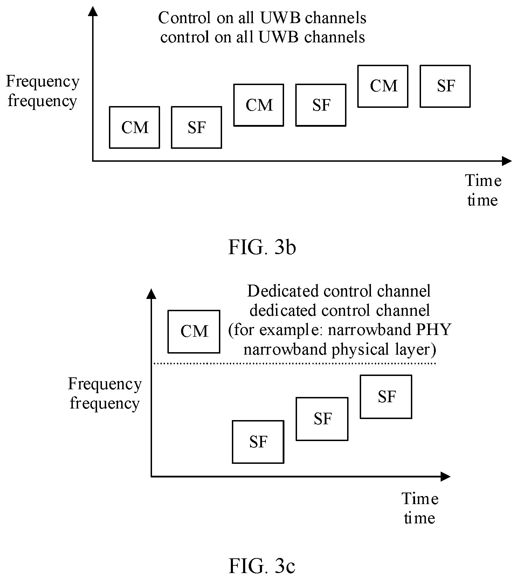

FIG. 3a to FIG. 3c are diagrams of three possible scheduling manners of frequency stitching according to an embodiment of this application. In FIG. 3a, FIG. 3b, and FIG. 3c, a horizontal coordinate represents a frequency (frequency), and a vertical coordinate represents time (time). As shown in FIG. 3a, one control message (control message, CM) may be used to schedule a plurality of sensing fragments (sensing fragments, SFs), and a frequency band (or a channel) for transmitting the control message is the same as a frequency band (or a channel) for transmitting a sensing fragment (SF). For example, a frequency band for transmitting a sensing fragment (SF) is a UWB frequency band. As shown in FIG. 3b, one control message (CM) may be used to schedule one sensing fragment (SF), and the control message and the sensing fragment (SF) are transmitted on a same frequency band (or a same channel). For example, a frequency band for transmitting a sensing fragment (SF) is a UWB frequency band. As shown in FIG. 3c, a control message is transmitted on a dedicated control channel (dedicated control channel), for example, on a narrowband. The control message may be used to schedule a plurality of sensing fragments (SFs). The sensing fragments (SFs) may be transmitted on a UWB frequency band (or a UWB channel).

In this application, the "transmission frequency band", the "frequency band", the "channel", and the like may be used interchangeably.

In the foregoing three scheduling manners (FIG. 3a to FIG. 3c), frequency bands (or channels) for transmitting the sensing fragment (SF) may overlap or may not overlap. Overlap frequency bands help track a phase during stitching, and improve accuracy of a channel impulse response (channel impulse response, CIR) on an effective channel after stitching.

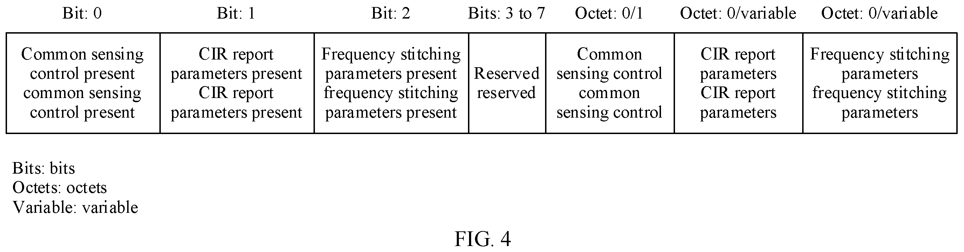

In a possible implementation, the control message (control message, CM) may include sensing control information. FIG. 4 is a diagram of a frame format of sensing control information according to an embodiment of this application. As shown in FIG. 4, the sensing control information includes but is not limited to a common sensing control present (Common Sensing Control Present) field, a CIR report parameters present (CIR Report Parameters Present) field, and a frequency stitching parameters present (Frequency Stitching Parameters Present) field, and optionally further includes a common sensing control (Common Sensing Control) field, a CIR report parameters (CIR Report Parameters) field, and a frequency stitching parameters (Frequency Stitching Parameters) field.

The common sensing control present field indicates whether a common sensing control field is present. For example, when a value of the common sensing control present field is 1, it indicates that the common sensing control field is present; or when a value is 0, it indicates that the common sensing control field is not present. The CIR report parameters present field indicates whether a CIR report parameters field is present. For example, when a value of the CIR report parameters present field is 1, it indicates that the CIR report parameters field is present; or when a value is 0, it indicates that the CIR report parameters field is not present. The frequency stitching parameters present field indicates whether a frequency stitching parameters field is present. For example, when a value of the frequency stitching parameters present field is 1, it indicates that the frequency stitching parameters field is present; or when a value is 0, it indicates that the frequency stitching parameters field is not present.

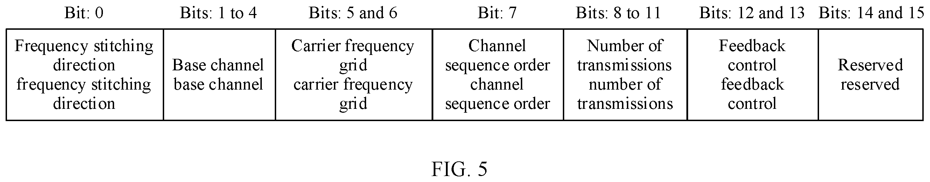

The common sensing control field may indicate a sensing mode, a responder role, a sensing packet (packet) type, and the like. The CIR report parameters field may indicate a CIR IQ (I channel and Q channel, where the I channel usually indicates a real part of a complex number, and the Q channel usually indicates an imaginary part of the complex number) bit width, a bitmap type, location information of a bitmap, the bitmap, whether to feed back a distance, whether to feed back a speed, whether to feed back an azimuth angle of arrival (azimuth angle of arrival, AOA), whether to compress, and the like. FIG. 5 is a diagram of a frame format of a frequency stitching parameters field according to an embodiment of this application. As shown in FIG. 5, the frequency stitching parameters field includes but is not limited to a frequency stitching direction (Frequency stitching direction) field, a base channel (Base Channel) field, a carrier frequency grid (Carrier Frequency Grid) field, a channel sequence order (Channel Sequence Order) field, and a feedback control (Feedback Control) field.

The frequency stitching direction field may indicate whether a center frequency of a channel for frequency stitching is increased or decreased relative to a center frequency of a base channel, or indicate whether a center frequency of a channel subsequently for frequency stitching is greater than or less than a center frequency of a first channel for frequency stitching. For example, when a value of the frequency stitching direction field is 1, it indicates that the center frequency of the channel for frequency stitching is increased on the basis of the center frequency of the base channel; or when a value is 0, it indicates that the center frequency of the channel for frequency stitching is decreased on the basis of the center frequency of the base channel. The base channel field may indicate a channel number (channel number) of the base channel. The base channel in this application may be the first channel for frequency stitching. The carrier frequency grid field may indicate a spacing between channels for frequency stitching. A correspondence between a value and a meaning of a carrier frequency grid field is shown in the following Table 1.

Table 1: Value and meaning of the carrier frequency grid field

| Carrier frequency grid field value value of the carrier frequency grid field | Meaning meaning |
|---|---|
| 0 | 499.2 MHz carrier frequency grid. No overlap of consecutive frequency stitching channels. 499.2 MHz carrier frequency grid. No overlap of consecutive frequency stitching channels. |
| 1 | 374.4 MHz carrier frequency grid. 25% overlap of consecutive frequency stitching channels. 374.4 MHz carrier frequency grid. 25% overlap of consecutive frequency stitching channels. |
| 2 | 249.6 MHz carrier frequency grid. 50% overlap of consecutive frequency stitching channels. 249.6 MHz carrier frequency grid. 50% overlap of consecutive frequency stitching channels. |
| 3 | 124.8 MHz carrier frequency grid. 75% overlap of consecutive frequency stitching channels. 124.8 MHz carrier frequency grid. 75% overlap of consecutive frequency stitching channels. |

The channel sequence order field may indicate whether channels for frequency stitching are sequentially transmitted or not sequentially transmitted in ascending or descending order of center frequencies. A value of a number of transmissions field plus 1 represents a total number of frequency bands (or channels) for frequency stitching. The feedback control field may indicate CIR feedback control of frequency stitching. A correspondence between a value and a meaning of a feedback control field is shown in the following Table 2.

Table 2: Value and meaning of the feedback control field

| Feedback control field value value of the feedback control field | Meaning meaning |
|---|---|
| 0 | Report after each transmission report after each transmission. |
| 1 | Report for all transmission after the last transmission report for all transmission after the last transmission. |
| 2 | Report for the aggregated channel after the last transmission report for the aggregated channel after the last transmission. |

Currently, a channel transmission order in frequency stitching may be classified into two types. One type is using channels in an out-of-sequence order (out-of-sequence channel order), referred to as an out-of-sequence channel order for short. The other type is using channels in an in-sequence order (in-sequence channel order), referred to as an in-sequence channel order for short.

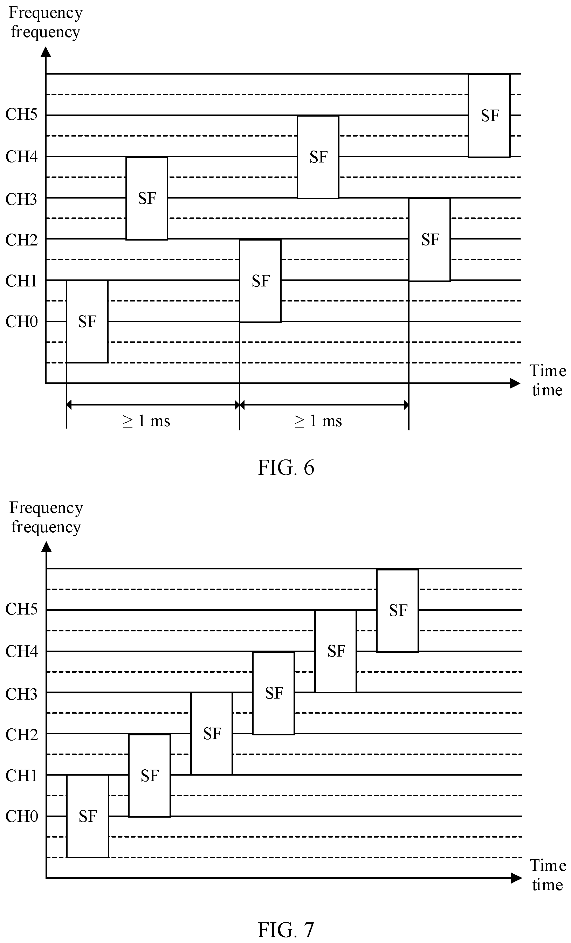

FIG. 6 is a diagram of an out-of-sequence channel order according to an embodiment of this application. As shown in FIG. 6, the existing out-of-sequence channel order is characterized by that adjacent transmission channels (for example, CH0 and CH3 in FIG. 6) do not overlap in frequency domain, and a signal start transmission interval between channels (for example, CH0 and CH1 in FIG. 6) that overlap in frequency domain needs to be greater than 1 ms (millisecond). According to transmission power requirements of UWB transmission, maximum average power per millisecond per megahertz of bandwidth is -41.3 dBm. If a transmission interval between channels that overlap in frequency domain is greater than 1 ms, each sensing fragment (SF) may be transmitted at allowed maximum average power.

A channel use order of the out-of-sequence channel order may be calculated according to the following Formula (1-1):

$$CH((p \times (OF + 1) \text{ MOD } (N)) + (p \times (OF + 1) \text{ DIV } (N))) \qquad (1\text{-}1)$$

Herein, a value of p is 0, 1, 2, ..., (N - 1). OF represents an overlap factor whose value is the same as a value of a carrier frequency grid field. If a total number M of channels (frequency bands) for frequency stitching is an integer multiple of (OF + 1), N is equal to M, or if a total number M of channels (frequency bands) for frequency stitching is not an integer multiple of (OF + 1), N is a smallest integer multiple of (OF + 1) in a positive integer greater than M. M is a value of a number of transmissions field plus 1. For example, M is equal to 6. It is assumed that OF is equal to 2 (that is, a frequency band overlap rate is 50%), and because M can exactly divide (OF + 1) = 3, N is equal to M equal to 6. It is assumed that OF is equal to 3 (that is, a frequency band overlap rate is 75%), and because M cannot exactly divide (OF + 1) = 4, N is equal to 8. It may be understood that if N is greater than M (that is, a value of M cannot exactly divide (OF + 1)), additional added channels (CH(M), CH(M + 1), ..., CH(N - 1)) are not actually used, and a transmitter does not transmit a UWB pulse on the additional added channels.

MOD represents a modulo operation; and DIV represents integer division. Details are not described below again. For the integer division (DIV), x DIV y is equal to an integer part of a quotient of x and y. For example, if x is equal to 4 and y is equal to 6, x DIV y = 0. For another example, if x is equal to 8 and y is equal to 6, x DIV y = 1.

FIG. 7 is a diagram of an in-sequence channel order according to an embodiment of this application. As shown in FIG. 7, the in-sequence channel order is characterized by that different channels are sequentially transmitted in ascending order or descending order of center frequencies. FIG. 7 shows the in-sequence channel order in a case in which a frequency band overlap rate is 50%. It may be understood that because there is no limitation that a signal start transmission interval between channels that overlap in frequency domain needs to be greater than 1 ms in the in-sequence channel order, total transmission time in the in-sequence channel order may be less than 1 ms. Certainly, the total transmission time in the in-sequence channel order may alternatively be greater than 1 ms or equal to 1 ms. This is not limited in embodiments of this application.

Unless otherwise specified, the "channel" mentioned in this application is a UWB channel, and a bandwidth of one UWB channel is 499.2 MHz.

A result, of the channel use order of the out-of-sequence channel order, calculated according to the foregoing Formula (1-1) does not match actual channels, and sensing or ranging based on frequency stitching cannot be implemented in an actual application.

In view of this, embodiments of this application provide an information exchange method in a UWB system, and an apparatus, so that a channel use order of an out-of-sequence channel order can be associated with actual UWB channels (for example, channel numbers). This completes a sensing solution based on frequency stitching, supports sensing measurement based on frequency stitching, and improves sensing performance.

The following describes in detail the technical solutions provided in this application with reference to more accompanying drawings.

In this application, unless otherwise specified, same or similar parts of embodiments or implementations may be mutually referenced. In embodiments of this application and the implementations/methods/implementation methods in the embodiments, unless otherwise specified or unless a logical conflict occurs, terms and/or descriptions are consistent and may be mutually referenced between different embodiments and between the implementations/methods/implementation methods in the embodiments. Technical features in the different embodiments and the implementations/methods/implementation methods in the embodiments may be combined to form a new embodiment, implementation, method, or implementation method based on an internal logical relationship thereof. The following implementations of this application are not intended to limit the protection scope of this application. It may be understood that a sequence of the following embodiments does not represent a degree of importance.

A communication apparatus in this application may support not only 802.15 series protocols, such as an 802.15.4ab standard or a next-generation standard of an 802.15.4ab standard, but also other standard protocols (for example, 802.11 series protocols), for example, a plurality of wireless local area network (wireless local area network, WLAN) standards of an 802.11 family, such as 802.11ax, 802.11ac, 802.11n, 802.11g, 802.11b, 802.11a, 802.11be, a next generation thereof.

In a possible implementation, the method provided in this application may be applied to a sensing scenario of one node and another node, or may be applied to a sensing scenario of one node and a plurality of nodes, or may be applied to a sensing scenario of a plurality of nodes and a plurality of other nodes. This is not limited in this application.

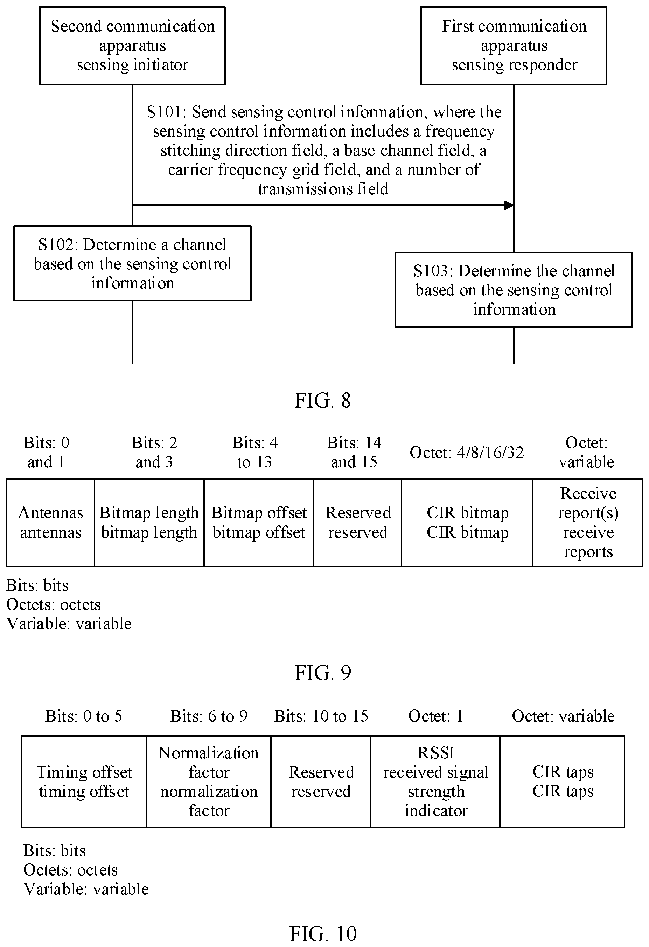

FIG. 8 is a schematic flowchart of an information exchange method in a UWB system according to an embodiment of this application. It mainly describes a relationship between a logical index in a channel use order and a channel number of a UWB channel in the method. A first communication apparatus and a second communication apparatus in the method may be any two devices that can perform data communication in FIG. 1 or FIG. 2. In a possible implementation, in the method, the first communication apparatus may be used as a sensing responder (sensing responder), and the second communication apparatus may be used as a sensing initiator (sensing initiator).

As shown in FIG. 8, the information exchange method in the UWB system includes but is not limited to the following steps.

S101: The second communication apparatus (sensing initiator) sends sensing control information to the first communication apparatus (sensing responder), where the sensing control information includes a frequency stitching direction field, a base channel field, a carrier frequency grid field, and a number of transmissions field.

Correspondingly, the first communication apparatus (sensing responder) receives the sensing control information.

S102: The second communication apparatus (sensing initiator) determines a channel based on the sensing control information.

S103: The first communication apparatus (sensing responder) determines the channel based on the sensing control information.

In a possible implementation, the sensing control information may include but is not limited to a frequency stitching parameters (frequency stitching parameters) field. For example, a frame format of the sensing control information may be shown in FIG. 4. Details are not described herein again. As shown in FIG. 4, in the sensing control information in this embodiment of this application, when a value of a frequency stitching parameters present field is 1, it indicates that the frequency stitching parameters field is present. The frequency stitching parameters field may include but is not limited to the frequency stitching direction (Frequency stitching direction) field, the base channel (Base Channel) field, the carrier frequency grid (Carrier Frequency Grid) field, a channel sequence order (Channel Sequence Order) field, and the number of transmissions (Number of Transmissions) field. For example, a frame format of the frequency stitching parameters field in this embodiment of this application may be shown in FIG. 5. Details are not described herein again.

The frequency stitching direction field may indicate whether a center frequency of a channel for frequency stitching is increased or decreased relative to a center frequency of a base channel, or indicate whether a center frequency of a channel subsequently for frequency stitching is greater than or less than a center frequency of a first channel for frequency stitching. For example, when a value of the frequency stitching direction field is 1, it indicates that the center frequency of the channel for frequency stitching is increased on the basis of the center frequency of the base channel; or when a value is 0, it indicates that the center frequency of the channel for frequency stitching is decreased on the basis of the center frequency of the base channel. The base channel field may indicate a channel number (channel number) of the base channel. The base channel may be the first channel for frequency stitching. The carrier frequency grid field may indicate a spacing between channels for frequency stitching. The channel sequence order field may indicate whether channels for frequency stitching are sequentially transmitted (in other words, channels are used in an in-sequence order (in-sequence channel order), referred to as an in-sequence channel order for short) or not sequentially transmitted (in other words, channels are used in an out-of-sequence order (out-of-sequence channel order), referred to as an out-of-sequence channel order for short) in ascending or descending order of center frequencies. A value of the number of transmissions field plus 1 represents a total number of frequency bands (or channels) for frequency stitching.

In a possible implementation, when the first communication apparatus determines that an order for transmitting the channels for frequency stitching is the out-of-sequence channel order, the first communication apparatus may determine a channel use order of the out-of-sequence channel order based on the spacing (namely, an overlap factor) between the channels for frequency stitching and the total number of frequency bands (or channels) for frequency stitching. In other words, the first communication apparatus may determine the channel use order of the out-of-sequence channel order based on the channel sequence order field, the carrier frequency grid field, and the number of transmissions field. The channel sequence order field indicates that the order for transmitting the channels for frequency stitching is the out-of-sequence channel order. After receiving the sensing control information, the second communication apparatus may determine, based on an indication of the channel sequence order field, that the order for transmitting the channels for frequency stitching is the out-of-sequence channel order. Then, the second communication apparatus may determine the channel use order of the out-of-sequence channel order based on the carrier frequency grid field and the number of transmissions field.

For example, the channel use order of the out-of-sequence channel order satisfies the following Formula (2-1):

$$\mathrm{CH}(l_i) = \mathrm{CH}((p \times (OF + 1)\ \mathrm{MOD}\ (N)) + (p \times (OF + 1)\ \mathrm{DIV}\ (N))) \qquad (2\text{-}1)$$

Herein, $l_i$ represents an $i^{th}$ logical index, $i = (p + 1)$, and a value of p is 0, 1, 2, ..., (N - 1). OF represents the overlap factor whose value is the same as a value of the carrier frequency grid field. If the total number M of frequency bands (channels) for frequency stitching is an integer multiple of (OF + 1), N is equal to M, or if the total number M of frequency bands (channels) for frequency stitching is not an integer multiple of (OF + 1), N is a smallest integer multiple of (OF + 1) in a positive integer greater than M. MOD represents a modulo operation. DIV represents integer division.

It may be understood that $\mathrm{CH}(l_i)$ calculated according to the foregoing Formula (2-1) is not a channel number of a UWB channel. For example, when eight channels participate in frequency stitching, that is, M is equal to 8, the channel use order calculated according to the foregoing Formula (2-1) is shown in the following Table 3.

Table 3

| OF (or carrier frequency grid field value) | Channel use order CH($l_i$) |
|---|---|
| 0 | CH(0), CH(1), CH(2), CH(3), CH(4), CH(5), CH(6), and CH(7) |
| 1 | CH(0), CH(2), CH(4), CH(6), CH(1), CH(3), CH(5), and CH(7) |
| 2 | CH(0), CH(3), CH(6), CH(1), CH(4), CH(7), CH(2), and CH(5) |
| 3 | CH(0), CH(4), CH(1), CH(5), CH(2), CH(6), CH(3), and CH(7) |

UWB channels specified in an 802.15.4z standard are shown in the following Table 4.

Table 4

| Channel number channel number (decimal decimal) | Center frequency, $f_c$ center frequency (MHz) | Bandwidth bandwidth (MHz) |
|---|---|---|
| 0 | 499.2 | 499.2 |
| 1 | 3494.4 | 499.2 |
| 2 | 3993.6 | 499.2 |
| 3 | 4492.8 | 499.2 |
| 4 | 3993.6 | 1331.2 |
| 5 | 6489.6 | 499.2 |
| 6 | 6988.8 | 499.2 |
| 7 | 6489.6 | 1081.6 |
| 8 | 7488.0 | 499.2 |
| 9 | 7987.2 | 499.2 |
| 10 | 8486.4 | 499.2 |
| 11 | 7987.2 | 1331.2 |
| 12 | 8985.6 | 499.2 |
| 13 | 9484.8 | 499.2 |
| 14 | 9984.0 | 499.2 |
| 15 | 9484.8 | 1354.97 |

In addition, to support frequency stitching, the following extended channel is defined:

$$f_c = 499.2 \text{ MHz} + N_c \times 124.8 \text{ MHz} \tag{2-2}$$

Herein, $N_c$ represents a channel number (channel number) of the extended UWB channel, whose value ranges from 0 to 97, and $f_c$ represents a center frequency corresponding to the channel $N_c$.

It can be learned from Table 3 and Table 4 that the channel use order in Table 3 does not match actually allocated channels. A value of the logical index $l_i$ ranges from 0 to (M - 1), and a value of a channel number of a UWB channel ranges from 0 to 97. For example, as shown in Table 3, it is assumed that channel numbers of the eight channels participating in frequency stitching are 60 to 67, or 60, 62, 64, 66, 68, 70, 72, and 74; and the logical indexes $l_i$ in the channel use order do not match the channel numbers of the eight channels.

Therefore, after the channel use order of the out-of-sequence channel order is determined, in this embodiment of this application, channels corresponding to the channel use order may be further determined based on the channel use order of the out-of-sequence channel order, the base channel, whether a center frequency of a channel for frequency stitching is increased or decreased relative to a center frequency of the base channel, the spacing (namely, the overlap factor) between the channels for frequency stitching, and the total number of frequency bands (or channels) for frequency stitching. In other words, after the channel use order of the out-of-sequence channel order is determined, the first communication apparatus and the second communication apparatus in this embodiment of this application may separately determine, based on the frequency stitching direction field, the base channel field, the carrier frequency grid field, and the number of transmissions field that are in the sensing control information, the channels corresponding to the channel use order.

In a possible implementation, in this embodiment of this application, the actually allocated channel may be referred to as a physical channel, and the result $CH(l_i)$ calculated according to the foregoing Formula (2-1) is referred to as a logical channel. The physical channel and the logical channel may be associated in the following manner.

In a possible implementation, the physical channel may be represented by the channel number $N_i$, and the logical channel may be represented by the logical index $l_i$. For example, a relationship between the channel number $N_i$ of the UWB channel and the logical index $l_i$ may be shown in the following Formula (2-3):

$$N_i = N_{base} + l_i \times (4 - OF) \times (2 \times D - 1) \qquad (2\text{-}3)$$

Herein, $N_i$ represents the channel number of the channel corresponding to the ith logical index $l_i$ in the channel use order. A value of $l_i$ ranges from 0 to (M - 1). M represents a total number of frequency bands (channels) for frequency stitching indicated by the number of transmissions field, and a value of M is equal to the value of the number of transmissions field plus 1. $N_{base}$ represents the channel number of the base channel indicated by the base channel field. $OF$ represents the overlap factor whose value is equal to the value of the carrier frequency grid field. $D$ represents the value of the frequency stitching direction field. In other words, a channel determined based on the sensing control information satisfies the foregoing Formula (2-3). It may be understood that a logical index corresponding to the base channel is 0. When the value of the frequency stitching direction field is 1, it indicates that the center frequency of the channel subsequently for frequency stitching is greater than the center frequency of the base channel, that is, the center frequency of the channel for frequency stitching is increased on the basis of the center frequency of the base channel; or when the value of the frequency stitching direction field is 0, it indicates that the center frequency of the channel subsequently for frequency stitching is less than the center frequency of the base channel, that is, the center frequency of the channel for frequency stitching is decreased on the basis of the center frequency of the base channel.

For example, if the value of the frequency stitching direction field being 1 indicates that the center frequency of the channel subsequently for frequency stitching is less than the center frequency of the base channel, or the value of the frequency stitching direction field being 0 indicates that the center frequency of the channel subsequently for frequency stitching is greater than the center frequency of the base channel, the foregoing Formula (2-3) may further have the following variation:

$$N_i = N_{base} + l_i \times (4 - OF) \times (1 - 2 \times D) \qquad (2\text{-}4)$$

For another example, if the center frequency of the channel subsequently for frequency stitching is greater than the center frequency of the base channel by default, or the center frequency of the channel subsequently for frequency stitching is determined, through negotiation between a receiver and a transmitter (namely, the first communication apparatus and the second communication apparatus), or predefinition in a protocol, or preconfiguration, or in another manner, to be greater than the center frequency of the base channel, the foregoing Formula (2-3) may further have the following variation:

$$N_i = N_{base} + l_i \times (4 - OF) \qquad (2\text{-}5)$$

For another example, if the center frequency of the channel subsequently for frequency stitching is less than the center frequency of the base channel by default, or the center frequency of the channel subsequently for frequency stitching is determined, through negotiation between a receiver and a transmitter (namely, the first communication apparatus and the second communication apparatus), or predefinition in a protocol, or preconfiguration, or in another manner, to be less than the center frequency of the base channel, the foregoing Formula (2-3) may further have the following variation:

$$N_i = N_{base} - l_i \times (4 - OF) \qquad (2\text{-}6)$$

It may be understood that the foregoing Formula (2-3) may further have other variations, and the variations are not enumerated in embodiments of this application. Any variation of the foregoing Formula (2-3) falls within the protection scope of embodiments of this application.

For example, as shown in Table 3, it is assumed that the eight channels participate in frequency stitching, that is, M is equal to 8, and OF is equal to 2. The channel use order calculated according to the foregoing Formula (2-1) is CH(0), CH(3), CH(6), CH(1), CH(4), CH(7), CH(2), and CH(5). It is assumed that the channel number of the base channel is 60, and the value of the frequency stitching direction field is 1, that is, $D$ in the foregoing Formula (2-3) is equal to 1. It indicates that the center frequency of the channel subsequently for frequency stitching is greater than the center frequency of the base channel. In this case, it can be obtained from the foregoing Formula (2-3) that a channel number $N_1$ of a UWB channel corresponding to a 1st logical index $I_1$ ($I_1 = 0$) in the channel use order is 60, a channel number $N_2$ of a UWB channel corresponding to a 2nd logical index $I_2$ ($I_2 = 3$) in the channel use order is 66, a channel number $N_3$ of a UWB channel corresponding to a 3rd logical index $I_3$ ($I_3 = 6$) in the channel use order is 72, a channel number $N_4$ of a UWB channel corresponding to a 4th logical index $I_4$ ($I_4 = 1$) in the channel use order is 62, a channel number $N_5$ of a UWB channel corresponding to a 5th logical index $I_5$ ($I_5 = 4$) in the channel use order is 68, a channel number $N_6$ of a UWB channel corresponding to a 6th logical index $I_6$ ($I_6 = 7$) in the channel use order is 74, a channel number $N_7$ of a UWB channel corresponding to a 7th logical index $I_7$ ($I_7 = 2$) in the channel use order is 64, and a channel number $N_8$ of a UWB channel corresponding to an 8th logical index $I_8$ ($I_8 = 5$) in the channel use order is 70. In short, channel numbers of channels corresponding to logical indexes 0, 3, 6, 1, 4, 7, 2, and 5 in the channel use order are respectively 60, 66, 72, 62, 68, 74, 64, and 70. It is further assumed that the channel number of the base channel is 48, and the value of the frequency stitching direction field is still 1, that is, $D$ in the foregoing Formula (2-3) is equal to 1. In this case, it can be obtained from the foregoing Formula (2-3) that channel numbers of channels corresponding to the channel use order CH(0), CH(3), CH(6), CH(1), CH(4), CH(7), CH(2), and CH(5) are respectively 48, 54, 60, 50, 56, 62, 52, and 58.

For another example, it is assumed that the eight channels participate in frequency stitching, that is, M is equal to 8, and OF is equal to 3. The channel use order calculated according to the foregoing Formula (2-1) is CH(0), CH(4), CH(1), CH(5), CH(2), CH(6), CH(3), and CH(7). It is assumed that the channel number of the base channel is 60, and the value of the frequency stitching direction field is 1, that is, $D$ in the foregoing Formula (2-3) is equal to 1. In this case, it can be obtained from the foregoing Formula (2-3) that a channel number $N_1$ of a UWB channel corresponding to a 1st logical index $I_1$ ($I_1 = 0$) in the channel use order is 60, a channel number $N_2$ of a UWB channel corresponding to a 2nd logical index $I_2$ ($I_2 = 4$) in the channel use order is 64, a channel number $N_3$ of a UWB channel corresponding to a 3rd logical index $I_3$ ($I_3 = 1$) in the channel use order is 61, a channel number $N_4$ of a UWB channel corresponding to a 4th logical index $I_4$ ($I_4 = 5$) in the channel use order is 65, a channel number $N_5$ of a UWB channel corresponding to a 5th logical index $I_5$ ($I_5 = 2$) in the channel use order is 62, a channel number $N_6$ of a UWB channel corresponding to a 6th logical index $I_6$ ($I_6 = 6$) in the channel use order is 66, a channel number $N_7$ of a UWB channel corresponding to a 7th logical index $I_7$ ($I_7 = 3$) in the channel use order is 63, and a channel number $N_8$ of a UWB channel corresponding to an 8th logical index $I_8$ ($I_8 = 7$) in the channel use order is 67. In short, channel numbers of channels corresponding to logical indexes 0, 4, 1, 5, 2, 6, 3, and 7 in the channel use order are respectively 60, 64, 61, 65, 62, 66, 63, and 67. It is further assumed that the channel number of the base channel is 48, and the value of the frequency stitching direction field is still 1, that is, $D$ in the foregoing Formula (2-3) is equal to 1. In this case, it can be obtained from the foregoing Formula (2-3) that channel numbers of channels corresponding to the channel use order CH(0), CH(4), CH(1), CH(5), CH(2), CH(6), CH(3), and CH(7) are respectively 48, 52, 49, 53, 50, 54, 51, and 55.

It can be learned that in this embodiment of this application, the corresponding channels can be determined based on the channel use order of the out-of-sequence channel order and the sensing control information, so that both the receiver and the transmitter (namely, the first communication apparatus and the second communication apparatus) have channel information corresponding to the channel use order. This completes a sensing solution based on frequency stitching. The channel use order of the out-of-sequence channel order is associated with actual channels, to support sensing measurement based on frequency stitching, and improve sensing performance.

In another possible implementation, the physical channel may be represented by the center frequency $f_i$, and the logical channel may be represented by the logical index $l_i$. It may be understood that the center frequencies of the physical channels one-to-one correspond to the channel numbers. For example, a relationship between the center frequency $f_i$ of the UWB channel and the logical index $l_i$ may be shown in the following Formula (2-7):

$$f_i = f_{base} + 124.8 \times l_i \times (4 - OF) \times (2 \times D - 1) \tag{2-7}$$

Herein, $f_i$ represents the center frequency of the channel corresponding to the ith logical index $l_i$ in the channel use order. $f_{base}$ represents the center frequency of the base channel indicated by the base channel field, and the center frequency of the base channel corresponds to the channel number of the base channel. For meanings of other parameters in Formula (2-7), refer to the foregoing descriptions. Details are not described herein again. In Formula (2-7), a unit of $f_i$ is megahertz (MHz), that is, a unit of the center frequency is MHz. It may be understood that if the unit of the center frequency is hertz (Hz), gigahertz (GHz), or another unit, corresponding unit conversion needs to be performed on the foregoing Formula (2-7). Details are not described herein.

For example, if the value of the frequency stitching direction field being 1 indicates that the center frequency of the channel subsequently for frequency stitching is less than the center frequency of the base channel, or the value of the frequency stitching direction field being 0 indicates that the center frequency of the channel subsequently for frequency stitching is greater than the center frequency of the base channel, the foregoing Formula (2-7) may further have the following variation:

$$f_i = f_{base} + 124.8 \times l_i \times (4 - OF) \times (1 - 2 \times D) \qquad (2\text{-}8)$$

For another example, if the center frequency of the channel subsequently for frequency stitching is greater than the center frequency of the base channel by default, or the center frequency of the channel subsequently for frequency stitching is determined, through negotiation between a receiver and a transmitter (namely, the first communication apparatus and the second communication apparatus), or predefinition in a protocol, or preconfiguration, or in another manner, to be greater than the center frequency of the base channel, the foregoing Formula (2-7) may further have the following variation:

$$f_i = f_{base} + 124.8 \times l_i \times (4 - OF) \qquad (2\text{-}9)$$

For another example, if the center frequency of the channel subsequently for frequency stitching is less than the center frequency of the base channel by default, or the center frequency of the channel subsequently for frequency stitching is determined, through negotiation between a receiver and a transmitter (namely, the first communication apparatus and the second communication apparatus), or predefinition in a protocol, or preconfiguration, or in another manner, to be less than the center frequency of the base channel, the foregoing Formula (2-7) may further have the following variation:

$$f_i = f_{base} - 124.8 \times l_i \times (4 - OF) \qquad (2\text{-}10)$$

It may be understood that the foregoing Formula (2-7) may further have other variations, and the variations are not enumerated in embodiments of this application. Any variation of the foregoing Formula (2-7) falls within the protection scope of embodiments of this application.

It can be learned that in this embodiment of this application, center frequencies of the corresponding channels can be determined based on the channel use order of the out-of-sequence channel order and the sensing control information, so that both the receiver and the transmitter (namely, the first communication apparatus and the second communication apparatus) have channel information corresponding to the channel use order. This completes a sensing solution based on frequency stitching. The channel use order of the out-of-sequence channel order is associated with actual channels, to support sensing measurement based on frequency stitching, and improve sensing performance.

In a possible implementation, after determining the channels corresponding to the channel use order, the first communication apparatus may further send/receive a plurality of sensing fragments (SFs) on the corresponding channels in the channel use order. For example, it is assumed that the eight channels participate in frequency stitching, that is, M is equal to 8, OF is equal to 2, and the channel use order is CH(0), CH(3), CH(6), CH(1), CH(4), CH(7), CH(2), and CH(5). The channel numbers of the channels corresponding to the channel use order are 60, 66, 72, 62, 68, 74, 64, and 70. The first communication apparatus may send/receive eight sensing fragments on the corresponding channels in the channel use order, that is, the first communication apparatus may first send/receive a sensing fragment 1 on a channel whose channel number is 60, then send/receive a sensing fragment 2 on a channel whose channel number is 66, then send/receive a sensing fragment 3 on a channel whose channel number is 72, then send/receive a sensing fragment 4 on a channel whose channel number is 62, then send/receive a sensing fragment 5 on a channel whose channel number is 68, then send/receive a sensing fragment 6 on a channel whose channel number is 74, then send/receive a sensing fragment 7 on a channel whose channel number is 64, and then send/receive a sensing fragment 8 on a channel whose channel number is 70. Similarly, after determining the channels corresponding to the channel use order, the second communication apparatus may further receive/send the plurality of sensing fragments (SFs) on the corresponding channels in the channel use order. Details are not described herein. It may be understood that for inter-packet frequency stitching, one sensing fragment (SF) may represent one or more PPDUs. For intra-packet frequency stitching, one sensing fragment (SF) may represent one or more sensing segments (SENS segments) in one PPDU.

It may be understood that the first communication apparatus (sensing responder) may be used as a sensing transmitter (sensing transmitter) to send a sensing PPDU. Correspondingly, the second communication apparatus (sensing initiator) may be used as a sensing receiver (sensing receiver) to receive the sensing PPDU. The first communication apparatus (sensing responder) may also be used as a sensing receiver (sensing receiver) to receive a sensing PPDU. Correspondingly, the second communication apparatus (sensing initiator) may alternatively be used as a sensing transmitter (sensing transmitter) to send the sensing PPDU. It may be further understood that when the first communication apparatus is used as the sensing receiver, the first communication apparatus needs to feed back a channel impulse response (CIR) to the second communication apparatus, so that the second communication apparatus calculates a sensing result or a ranging result.

In this embodiment of this application, based on a plurality of pieces of content in the existing sensing control information, the channel use order of the out-of-sequence channel order is associated with the actual UWB channels (for example, the channel numbers or center frequencies), to improve the sensing solution based on frequency stitching, support sensing measurement based on frequency stitching, and improve sensing performance. In addition, in embodiments of this application, no additional signaling overhead is required, implementation is simple, and complexity is low.

In a possible implementation, a party that receives a UWB signal (or UWB PPDU) may feed back the channel impulse response (channel impulse response, CIR) to a party that sends the UWB signal (or UWB PPDU). The UWB signal (or UWB PPDU) may be for sensing measurement, or may be for ranging. This is not limited in embodiments of this application. Feedback of the CIR may be implemented by using a CIR report information element (CIR report information element, CIR report IE). FIG. 9 is a diagram of a frame format of a CIR report information element according to an embodiment of this application. As shown in FIG. 9, the CIR report IE includes but is not limited to an antennas (Antennas) field, a bitmap length (Bitmap Length) field, a bitmap offset (Bitmap Offset) field, a channel impulse response bitmap (CIR Bitmap), and one or more receive report (Receive Report) fields.

A value of the antennas field plus 1 represents a number of antennas corresponding to CIR reports that need to be fed back. The bitmap length field may represent a length of a CIR bitmap. The bitmap offset field may represent an offset of the CIR bitmap. The CIR bitmap may represent whether a corresponding CIR tap is fed back. One receive report field may indicate one CIR report.

FIG. 10 is a diagram of a frame format of a receive report field according to an embodiment of this application. As shown in FIG. 10, the receive report field includes but is not limited to a timing offset (Timing Offset) field, a normalization factor (Normalization factor) field, a received signal strength indication (received signal strength indication, RSSI), and CIR taps (CIR Taps) field. The timing offset field may indicate an offset of a reference path and CIR report time. The normalization factor field may indicate a left shift bit number of pieces of IQ (I channel and Q channel) data represented by using a binary. The RSSI may represent received signal strength. The CIR taps field may indicate values of CIR Taps, and each CIR tap corresponds to one bit in a CIR bitmap.

It can be learned from FIG. 9 and FIG. 10 that in the conventional technology, only CIRs of different antennas are considered, and a structure of a sensing PPDU is not considered.

In view of this, embodiments of this application further provide an information exchange method in a UWB system, and an apparatus. A structure of a sensing PPDU is considered in a CIR report IE, a CIR feedback solution is completed, and an appearance order of CIR reports in the CIR report IE is specified, to support sensing measurement, and improve sensing performance.

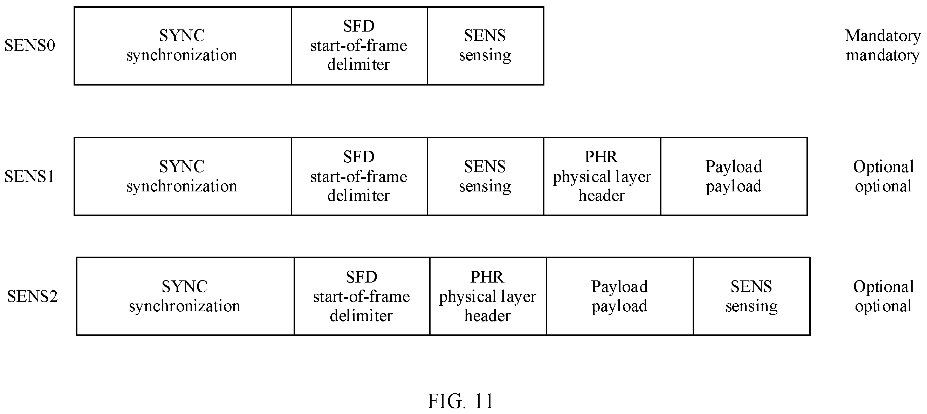

In the discussion of IEEE802.15.4ab, a physical layer protocol data unit (physical layer protocol data unit, PPDU) format for sensing measurement may be shown in FIG. 11. FIG. 11 is a diagram of the PPDU format according to an embodiment of this application. FIG. 11 shows three possible PPDU formats (PPDU formats). A PPDU includes but is not limited to: a synchronization (synchronization, SYNC) field, a start-of-frame delimiter (start-of-frame delimiter, SFD) field, and a sensing (sensing, SENS) field. In a possible implementation, the PPDU may further include one or more of the following: a physical layer header (physical layer header, PHR) or a payload (payload) field. In this application, each field (field) of the PPDU may include one or more symbols (symbols), and symbols (symbols) in the SYNC field, the SFD field, and the SENS field may be generated by using a sequence. For example, the synchronization (SYNC) field may include a plurality of repeated symbols (symbols), and the symbol is generated by using a preamble sequence. A symbol in the synchronization (SYNC) field may be obtained by spreading a preamble sequence, for example, adding several 0 elements after each element of the preamble sequence to obtain the symbol.

The synchronization (SYNC) field may be for PPDU detection and synchronization. In some scenarios, some symbols of the synchronization (SYNC) field may be used PPDU detection and synchronization, and the other symbols may be for sensing measurement. The sensing field (SENS field) may be for sensing measurement, and includes one or more sensing segments (SENS segments). Each sensing segment may support 32, 64, or 128 sensing symbols, or may support 16, 256, or 512 sensing symbols. The sensing symbol may be generated by using a predefined sequence (for example, a sequence, for sensing, defined in a related standard of 802.15.4). The PHR carries some physical layer indication information, such as modulation and coding information or PPDU length information, to assist a receiver in correctly demodulating data. The payload field is used to carry data.

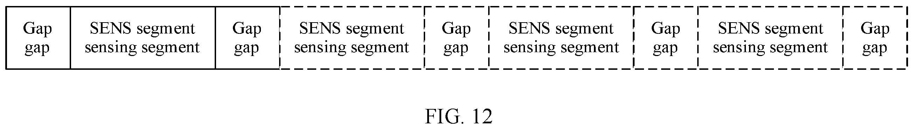

For example, FIG. 12 is a diagram of a structure of a sensing field according to an embodiment of this application. Currently, the sensing field (SENS field) may include one to four sensing segments (SENS segments). Certainly, with evolution of a standard, the sensing field may include more sensing segments (SENS segments). This is not limited in embodiments of this application. One SENS segment may include one or more sensing symbols (sensing symbols). FIG. 12 shows the structure of the sensing field (SENS field) including at least one sensing segment (SENS segment). A gap (gap) is inserted between adjacent SENS segments. Duration of each gap is one sensing symbol, and is approximately 1

μs (microsecond). Different SENS segments may be sent by using different transmit antennas. Each signal of each SENS segment received by each receive antenna at a receiver can generate a corresponding CIR report.

It can be learned that a total number of CIR reports is equal to a product of a number of receive antennas and a number of SENS segments.

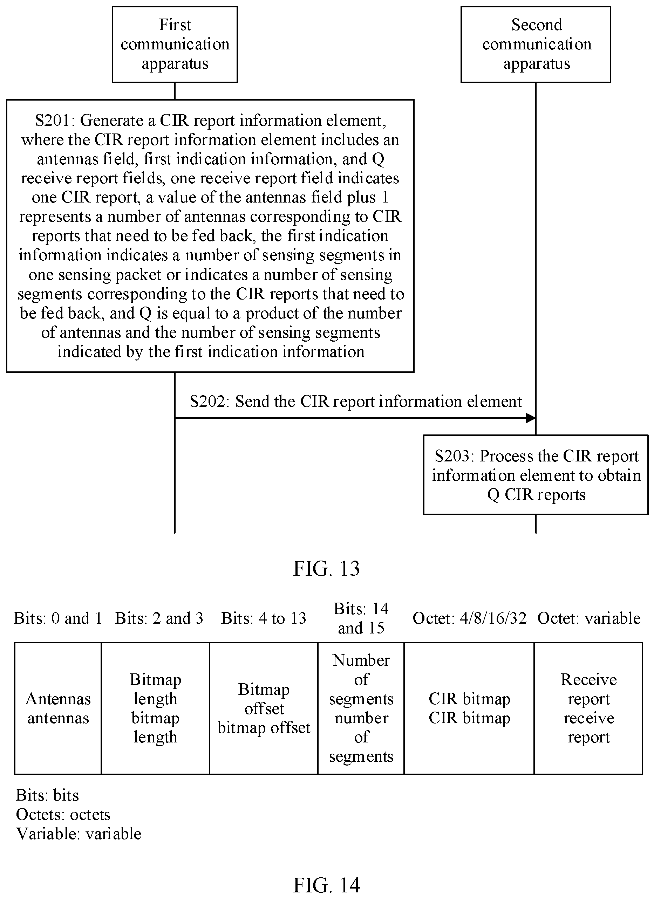

FIG. 13 is another schematic flowchart of an information exchange method in a UWB system according to an embodiment of this application. The method mainly describes a feedback manner of a CIR report. The method may be applied to a sensing/ranging scenario based on frequency stitching, or may be applied to a conventional sensing/ranging scenario. A first communication apparatus and a second communication apparatus in the method may be any two devices that can perform data communication in FIG. 1 or FIG. 2. In a possible implementation, in the method, the first communication apparatus may be used as a sensing receiver (sensing receiver), and the second communication apparatus may be used as a sensing transmitter (sensing transmitter).

As shown in FIG. 13, the information exchange method in the UWB system includes but is not limited to the following steps.

S201: The first communication apparatus generates a CIR report information element, where the CIR report information element includes an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information.

S202: The first communication apparatus sends the CIR report information element to the second communication apparatus.

Correspondingly, the second communication apparatus receives the CIR report information element.

S203: The second communication apparatus processes the CIR report information element to obtain Q CIR reports.

In a possible implementation, the CIR report information element may include but is not limited to the antennas field, the first indication information, and the Q receive report fields. The value of the antennas field plus 1 represents the number of antennas corresponding to CIR reports that need to be fed back. One receive report field may indicate one CIR report, and the Q receive report fields indicate Q CIR reports in total. For example, a frame format of a receive report field may be shown in FIG. 10. The first indication information may indicate the number of sensing segments (SENS segments) in one sensing packet (or sensing PPDU). Alternatively, the first indication information may indicate the number of sensing segments corresponding to CIR reports that need to be fed back. Alternatively, the first indication information may indicate a number of some or all SENS segments for frequency stitching, or a number of SENS segments in K (K is a positive integer less than or equal to M, and M is a total number of frequency bands for frequency stitching) sensing packets (sensing PPDUs) for frequency stitching, or the like. In other words, the first indication information may indicate different numbers of SENS segments corresponding to all CIR reports in the CIR report information element. Q is equal to the product of the number of antennas (namely, the value of the antennas field plus 1) and the number of sensing segments indicated by the first indication information.

In a frequency stitching scenario, for intra-packet frequency stitching, the first indication information may indicate a number of SENS segments in one sensing packet (or sensing PPDU). For inter-packet frequency stitching, one CIR report IE may be fed back for one sensing packet (or sensing PPDU). In this case, the first indication information may still indicate the number of SENS segments in the sensing packet (or sensing PPDU). Certainly, for inter-packet frequency stitching, one CIR report IE may also be fed back for a plurality of sensing packets for frequency stitching. Therefore, the first indication information in the CIR report IE may indicate a number of SENS segments in the plurality of sensing packets. For intra-packet and inter-packet frequency stitching (a case in which there are both intra-packet frequency stitching and inter-packet frequency stitching), one CIR report IE may carry CIR reports of a number of SENS segments, and the first indication information may indicate a number of some or all SENS segments for frequency stitching, or may indicate a number of SENS segments in some sensing packets for frequency stitching.

For example, FIG. 14 is a diagram of another frame format of a CIR report information element according to an embodiment of this application. As shown in FIG. 14, the CIR report IE includes but is not limited to an antennas field, a number of segments (Number of Segments) field (namely, the foregoing first indication information), and a receive report field. For example, a value of the number of segments field (namely, the first indication information) plus 1 indicates a number of sensing segments (SENS segments) in one sensing packet (or sensing PPDU), or indicates a number of sensing segments corresponding to CIR reports that need to be fed back, or indicates a number of different SENS segments corresponding to the CIR reports in the CIR report IE.

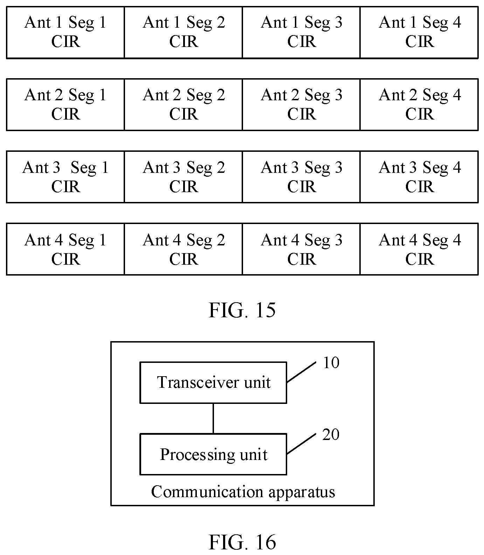

It can be learned from a structure of a sensing packet that currently each sensing packet includes a maximum of four SENS segments, and an existing receiver (namely, the first communication apparatus) has a maximum of four receive antennas. Therefore, one sensing packet corresponds to a maximum of 16 ($4 \times 4$) CIR reports, namely, 16 receive report fields. FIG. 15 is a diagram of CIRs corresponding to different antennas and different SENS segments according to an embodiment of this application. Receive antennas are antennas 1 to 4. For brevity, Ant 1 to Ant 4 are used in FIG. 15. Sensing segments in one sensing packet are a SENS segment 1 to a SENS segment 4. For brevity, Seg 1 to Seg 4 are used in FIG. 15. As shown in FIG. 15, each signal of each SENS segment received by each receive antenna at a receiver can generate a corresponding CIR report. It may be understood that Ant x Seg y CIR in FIG. 15 represents a CIR report corresponding to a SENS segment y received by a receive antenna x. Values of x and y are all 1, 2, 3, and 4.

In a possible implementation, the two communication parties (namely, the first communication apparatus and the second communication apparatus) need to agree on an appearance order of the CIR reports in the CIR report IE, namely, an arrangement order. For example, the appearance order (namely, the arrangement order) of the CIR reports in the CIR report IE may include but is not limited to: first traversing the CIR report corresponding to the antenna, and then traversing the CIR report corresponding to the sensing segment. For example, the CIR reports in the CIR report IE are arranged in order of top to bottom and left to right in FIG. 15. It may be understood that if the number of receive antennas is less than 4, and/or the number of sensing segments in one sensing packet is less than 4, corresponding CIR reports are some CIR reports in FIG. 15. Therefore, in a process of traversing FIG. 15, if a CIR report is not present, skipping is performed. For example, when there are only two receive antennas, it is assumed that one sensing packet includes four SENS segments. When traversing is performed in FIG. 15, a third row and a fourth row in FIG. 15 need to be skipped, or the CIR report IE does not include a third row and a fourth row in FIG. 15. For another example, the appearance order (namely, the arrangement order) of the CIR reports in the CIR report IE may include but is not limited to: first traversing the CIR report corresponding to the sensing segment, and then traversing the CIR report corresponding to the antenna. For example, the CIR reports in the CIR report IE are arranged in order of left to right and top to bottom and in FIG. 15. Certainly, in a process of traversing FIG. 15, if a CIR report is not present, skipping is performed.

In a frequency stitching scenario in this embodiment of this application, different SENS segments or different sensing packets may be sent on different center frequencies (or frequencies or channels), and one sensing measurement requires CIRs of a plurality of SENS segments or a plurality of sensing packets. A CIR report corresponding to a sensing segment is first traversed and then a CIR report corresponding to an antenna is traversed, to ensure that the CIR reports required for one sensing measurement can be placed together, thereby facilitating subsequent processing.

In a possible implementation, the appearance order of the CIR reports in the CIR report IE may be predefined in a standard or default. In this way, implementation is simple, complexity is low, and no additional signaling overhead is required.

In another possible implementation, the appearance order of the CIR reports in the CIR report IE may be determined through negotiation between the receiver and the transmitter (namely, the first communication apparatus and the second communication apparatus). In this way, the arrangement order of the CIR reports is more flexible.

In another possible implementation, the appearance order of the CIR reports in the CIR report IE may be preconfigured, or may be indicated by the first communication apparatus/the second communication apparatus. For example, the CIR report IE may carry second indication information indicating the arrangement order of the CIR reports in the CIR report IE. Alternatively, the first communication apparatus/second communication apparatus may send second indication information, to indicate the arrangement order of the CIR reports in the CIR report IE. For example, each CIR report is numbered, and then numbers indicate the arrangement order of the CIR reports in the CIR report IE. For another example, the second indication information is one bit. When the bit is 1, it indicates that a CIR report corresponding to an antenna is first traversed and then a CIR report corresponding to a sensing segment is traversed; or when the bit is 0, it indicates that a CIR report corresponding to a sensing segment is first traversed and then a CIR report corresponding to an antenna is traversed. In this way, the appearance order of the CIR reports in the CIR report IE can be set, and is more flexible.

A manner in which the two communication parties (namely, the first communication apparatus and the second communication apparatus) learn of the appearance order of the CIR reports in the CIR report IE is not limited in embodiments of this application.

In this embodiment of this application, CIRs corresponding to different antennas and different SENS segments are considered, the number of segments field (namely, the foregoing first indication information) is added to the CIR report IE, to indicate the number of SENS segments in one sensing packet or the number of sensing segments corresponding to CIR reports that need to be fed back, and the appearance order of the CIR reports in the CIR report IE is determined. This can complete a CIR feedback solution, complete a sensing measurement solution, align understanding of the CIR report by the two communication parties, support sensing measurement, and improve sensing performance.

In a possible implementation, the embodiment shown in FIG. 13 may be implemented in combination with the embodiment shown in FIG. 8, or may be implemented independently. When the embodiment shown in FIG. 13 is implemented in combination with the embodiment shown in FIG. 8, the first communication apparatus is used as both the sensing responder and the sensing receiver. Correspondingly, the second communication apparatus is used as both the sensing initiator and the sensing transmitter. For example, after step S 103 in the embodiment shown in FIG. 8, the second communication apparatus sends a plurality of SENS segments or a plurality of sensing packets; the first communication apparatus generates CIR reports based on the received SENS segments or sensing packets; and the first communication apparatus sends the CIR report IE to the second communication apparatus. For specific implementation of the CIR report IE, refer to the foregoing descriptions. Details are not described herein again.

The foregoing content describes in detail the method provided in this application. To facilitate implementation of the foregoing solutions in embodiments of this application, embodiments of this application further provide a corresponding apparatus or device.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that in this application, division into the modules is an example, and is merely a logical function division. In actual implementation, another division manner may be used. The following describes in detail communication apparatuses in embodiments of this application with reference to FIG. 16 to FIG. 18.

FIG. 16 is a diagram of a structure of a communication apparatus according to an embodiment of this application. As shown in FIG. 16, the communication apparatus includes a transceiver unit 10 and a processing unit 20. The transceiver unit 10 may implement a corresponding communication function, and the processing unit 20 is configured to perform data processing. For example, the transceiver unit 10 may also be referred to as a communication interface, a communication unit, or the like.

In some embodiments of this application, the communication apparatus may be the first communication apparatus shown above. To be specific, the communication apparatus shown in FIG. 16 may be configured to perform steps, functions, or the like performed by the first communication apparatus in the foregoing method embodiments. For example, the communication apparatus may be the first communication apparatus or a chip, a functional module, or the like configured in the first communication apparatus. This is not limited in embodiments of this application. The transceiver unit 10 is configured to perform a receiving/sending-related operation of the first communication apparatus in the foregoing method embodiments, and the processing unit 20 is configured to perform a processing-related operation of the first communication apparatus in the foregoing method embodiments.

In a design, the transceiver unit 10 is configured to receive sensing control information, where the sensing control information includes a frequency stitching direction field, a base channel field, a carrier frequency grid field, and a number of transmissions field; and the processing unit 20 is configured to determine a channel based on the sensing control information.

The channel satisfies:

$$N_i = N_{base} + l_i \times (4 - OF) \times (2 \times D - 1).$$

Herein, $N_i$ represents a channel number of a channel corresponding to an $i^{th}$ logical index $l_i$ in a channel use order, a value of $l_i$ ranges from 0 to (M - 1), M represents a total number of frequency bands for frequency stitching indicated by the number of transmissions field, $N_{base}$ represents a channel number of a base channel indicated by the base channel field, $OF$ represents a value of the carrier frequency grid field, and $D$ represents a value of the frequency stitching direction field.

Alternatively, the channel satisfies:

$$f_i = f_{base} + 124.8 \times l_i \times (4 - OF) \times (2 \times D - 1).$$

$f_i$ represents a center frequency of a channel corresponding to an $i^{th}$ logical index $l_i$ in a channel use order, a value of $l_i$ ranges from 0 to (M - 1), M represents a total number of frequency bands for frequency stitching indicated by the number of transmissions field, a unit of $f_i$ is megahertz, $f_{base}$ represents a center frequency of a base channel indicated by the base channel field, the center frequency of the base channel corresponds to a channel number of the base channel, $OF$ represents a value of the carrier frequency grid field, and $D$ represents a value of the frequency stitching direction field.

For example, the sensing control information further includes a channel sequence order field, and the channel sequence order field indicates that an order for transmitting channels for frequency stitching is an out-of-sequence channel order. The channel use order satisfies:

$$CH(l_i) = CH((p \times (OF + 1)\ \text{MOD}\ (N)) + (p \times (OF + 1)\ \text{DIV}\ (N))).$$

$l_i$ represents the $i^{th}$ logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

It may be understood that the transceiver unit 10 may receive the sensing control information from another communication apparatus, or the transceiver unit 10 inputs the sensing control information from another component or another functional module in the communication apparatus. Related descriptions of inputting other information by the transceiver unit are similar. Details are not described below again.

For example, the transceiver unit 10 is further configured to send a CIR report information element, where the CIR report information element includes an antennas field, first indication information, and Q receive report fields. One receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information.

It may be understood that the transceiver unit 10 may send the CIR report information element to another communication apparatus, or the transceiver unit 10 outputs the CIR report information element from the processing unit 20 to another component, another function module, or the like in the communication apparatus. Related descriptions of outputting other information by the transceiver unit are similar. Details are not described below again.

For example, an arrangement order of CIR reports in the CIR report information element includes: first traversing a CIR report corresponding to an antenna and then traversing a CIR report corresponding to a sensing segment; or first traversing a CIR report corresponding to a sensing segment and then traversing a CIR report corresponding to an antenna.

For example, the CIR report information element further includes second indication information, and the second indication information indicates the arrangement order of the CIR reports in the CIR report information element.

For example, the transceiver unit 10 is further configured to receive or send second indication information, where the second indication information indicates the arrangement order of the CIR reports in the CIR report information element.

In this embodiment of this application, for descriptions of the sensing control information, the channel use order, and the like, refer to the descriptions in the method embodiment shown in FIG. 8. Details are not described herein again.

It may be understood that the specific descriptions of the transceiver unit and the processing unit in embodiments of this application are merely examples. For specific functions, steps, or the like performed by the transceiver unit and the processing unit, refer to the method embodiment shown in FIG. 8. Details are not described herein again. In addition, for technical effect of this embodiment of this application, refer to the technical effect of the method embodiment shown in FIG. 8. For brevity, details are not described herein.

In another design, the processing unit 20 is configured to generate a CIR report information element, where the CIR report information element includes an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and the transceiver unit 10 is configured to send the CIR report information element.

For example, an arrangement order of CIR reports in the CIR report information element includes: first traversing a CIR report corresponding to an antenna and then traversing a CIR report corresponding to a sensing segment or a sensing packet; or first traversing a CIR report corresponding to a sensing segment or a sensing packet and then traversing a CIR report corresponding to an antenna.

For example, the CIR report information element further includes second indication information, and the second indication information indicates the arrangement order of the CIR reports in the CIR report information element.

For example, the transceiver unit 10 is further configured to receive or send second indication information, where the second indication information indicates the arrangement order of the CIR reports in the CIR report information element.

In this embodiment of this application, for descriptions of the CIR report information element, the first indication information, the second indication information, and the like, refer to the descriptions in the method embodiment shown in FIG. 13. Details are not described herein again.

It may be understood that the specific descriptions of the transceiver unit and the processing unit in embodiments of this application are merely examples. For specific functions, steps, or the like performed by the transceiver unit and the processing unit, refer to the method embodiment shown in FIG. 13. Details are not described herein again. In addition, for technical effect of this embodiment of this application, refer to the technical effect of the method embodiment shown in FIG. 13. For brevity, details are not described herein.

Still refer to FIG. 16. In some other embodiments of this application, the communication apparatus may be the second communication apparatus shown above. To be specific, the communication apparatus shown in FIG. 16 may be configured to perform steps, functions, or the like performed by the second communication apparatus in the foregoing method embodiments. For example, the communication apparatus may be the second communication apparatus or a chip, a functional module, or the like configured in the second communication apparatus. This is not limited in embodiments of this application. The transceiver unit 10 is configured to perform a receiving/sending-related operation of the second communication apparatus in the foregoing method embodiments, and the processing unit 20 is configured to perform a processing-related operation of the second communication apparatus in the foregoing method embodiments.

In a design, the transceiver unit 10 is configured to send sensing control information, where the sensing control information includes a frequency stitching direction field, a base channel field, a carrier frequency grid field, and a number of transmissions field; and the processing unit 20 is configured to determine a channel based on the sensing control information.

The channel satisfies:

$$N_i = N_{base} + l_i \times (4 - OF) \times (2 \times D - 1).$$

Herein, $N_i$ represents a channel number of a channel corresponding to an ith logical index $l_i$ in a channel use order, a value of $l_i$ ranges from 0 to (M - 1), M represents a total number of frequency bands for frequency stitching indicated by the number of transmissions field, $N_{base}$ represents a channel number of a base channel indicated by the base channel field, $OF$ represents a value of the carrier frequency grid field, and $D$ represents a value of the frequency stitching direction field.

Alternatively, the channel satisfies: $f_i = f_{base} + 124.8 \times l_i \times (4 - OF) \times (2 \times D - 1)$.

$f_i$ represents a center frequency of a channel corresponding to an ith logical index $l_i$ in a channel use order, a value of $l_i$ ranges from 0 to (M - 1), M represents a total number of frequency bands for frequency stitching indicated by the number of transmissions field, a unit of $f_i$ is megahertz, $f_{base}$ represents a center frequency of a base channel indicated by the base channel field, the center frequency of the base channel corresponds to a channel number of the base channel, $OF$ represents a value of the carrier frequency grid field, and $D$ represents a value of the frequency stitching direction field.

For example, the sensing control information further includes a channel sequence order field, and the channel sequence order field indicates that an order for transmitting channels for frequency stitching is an out-of-sequence channel order. The channel use order satisfies:

$$CH(l_i) = CH((p \times (OF + 1)\ \text{MOD}\ (N)) + (p \times (OF + 1)\ \text{DIV}\ (N))).$$

$l_i$ represents the ith logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

For example, the transceiver unit 10 is further configured to: receive a CIR report information element, where the CIR report information element includes an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and

process the CIR report element to obtain Q CIR reports.

For example, an arrangement order of CIR reports in the CIR report information element includes: first traversing a CIR report corresponding to an antenna and then traversing a CIR report corresponding to a sensing segment; or first traversing a CIR report corresponding to a sensing segment and then traversing a CIR report corresponding to an antenna.

For example, the CIR report information element further includes second indication information, and the second indication information indicates the arrangement order of the CIR reports in the CIR report information element.

For example, the transceiver unit 10 is further configured to send or receive second indication information, where the second indication information indicates the arrangement order of the CIR reports in the CIR report information element.

In this embodiment of this application, for descriptions of the sensing control information, the channel use order, and the like, refer to the descriptions in the method embodiment shown in FIG. 8. Details are not described herein again.

It may be understood that the specific descriptions of the transceiver unit and the processing unit in embodiments of this application are merely examples. For specific functions, steps, or the like performed by the transceiver unit and the processing unit, refer to the method embodiment shown in FIG. 8. Details are not described herein again. In addition, for technical effect of this embodiment of this application, refer to the technical effect of the method embodiment shown in FIG. 8. For brevity, details are not described herein.

In another design, the transceiver unit 10 is configured to receive a CIR report information element, where the CIR report information element includes an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and the processing unit 20 is configured to process the CIR report information element to obtain Q CIR reports.

For example, an arrangement order of the CIR reports in the CIR report information element includes: first traversing a CIR report corresponding to an antenna and then traversing a CIR report corresponding to a sensing segment or a sensing packet; or first traversing a CIR report corresponding to a sensing segment or a sensing packet and then traversing a CIR report corresponding to an antenna.

For example, the CIR report information element further includes second indication information, and the second indication information indicates the arrangement order of the CIR reports in the CIR report information element.

For example, the transceiver unit 10 is further configured to send or receive second indication information, where the second indication information indicates the arrangement order of the CIR reports in the CIR report information element.

In this embodiment of this application, for descriptions of the CIR report information element, the first indication information, the second indication information, and the like, refer to the descriptions in the method embodiment shown in FIG. 13. Details are not described herein again.

It may be understood that the specific descriptions of the transceiver unit and the processing unit in embodiments of this application are merely examples. For specific functions, steps, or the like performed by the transceiver unit and the processing unit, refer to the method embodiment shown in FIG. 13. Details are not described herein again. In addition, for technical effect of this embodiment of this application, refer to the technical effect of the method embodiment shown in FIG. 13. For brevity, details are not described herein.

The foregoing describes the communication apparatus in embodiments of this application, and the following describes a possible product form of the communication apparatus. It should be understood that a product in any form having the functions of the communication apparatus described in FIG. 16 falls within the protection scope of embodiments of this application. It should be further understood that the following description is merely an example, and does not limit a product form of the communication apparatus in embodiments of this application.

In a possible implementation, in the communication apparatus shown in FIG. 16, the processing unit 20 may be one or more processors, and the transceiver unit 10 may be a transceiver. Alternatively, the transceiver unit 10 may be a sending unit and a receiving unit, the sending unit may be a transmitter machine, and the receiving unit may be a receiver machine. The sending unit and the receiving unit are integrated into one device, for example, a transceiver. In embodiments of this application, the processor and the transceiver may be coupled, or the like. A manner of a connection between the processor and the transceiver is not limited in embodiments of this application. In a process of performing the foregoing method, a process of sending information (for example, sending the sensing control information, the CIR report information element, or the like) in the foregoing methods may be understood as a process of outputting the information by the processor. When outputting the information, the processor outputs the information to the transceiver, so that the transceiver transmits the information. After the information is output by the processor, other processing may further need to be performed on the information before the information arrives at the transceiver. Similarly, a process of receiving information (for example, receiving the sensing control information, the CIR report information element, or the like) in the foregoing methods may be understood as a process of receiving the input information by the processor. When the processor receives the input information, the transceiver receives the information, and inputs the information into the processor. Further, after the transceiver receives the information, other processing may need to be performed on the information before processed information is input into the processor.

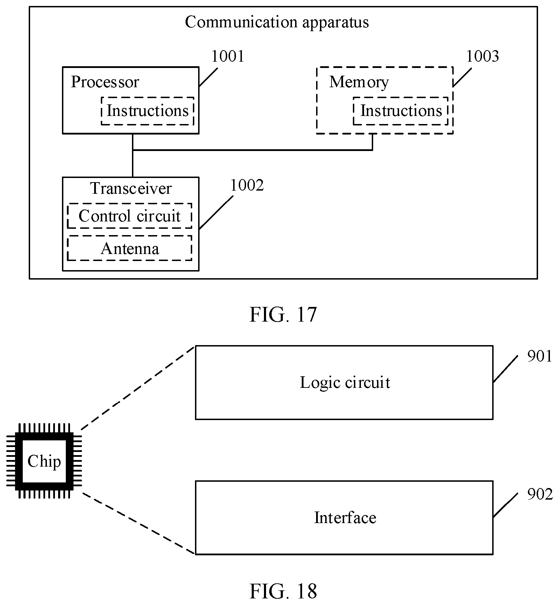

FIG. 17 is a diagram of another structure of a communication apparatus according to an embodiment of this application. The communication apparatus may be a first communication apparatus, a second communication apparatus, or a chip in the first communication apparatus or the second communication apparatus. FIG. 17 shows only main components of the communication apparatus. In addition to a processor 1001, the communication apparatus may further include a transceiver 1002, a memory 1003, and an input/output apparatus (not shown in the figure).

The processor 1001 is mainly configured to: process a communication protocol and communication data, control the entire communication apparatus, execute a software program, and process data of the software program. The memory 1003 is mainly configured to store the software program and data. The transceiver 1002 may include a control circuit and an antenna. The control circuit is mainly configured to: perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1001 may read the software program in the memory 1003, interpret and execute instructions of the software program, and process the data of the software program. When data needs to be sent in a wireless manner, the processor 1001 performs baseband processing on the to-be-sent data, and outputs a baseband signal to the radio frequency circuit. The radio frequency circuit performs radio frequency processing on the baseband signal, and then sends a radio frequency signal to the outside through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1001. The processor 1001 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The processor 1001, the transceiver 1002, and the memory 1003 may be connected through a communication bus.

For example, when the communication apparatus is configured to perform the steps, methods, or functions performed by the first communication apparatus in the foregoing method embodiment shown in FIG. 8, the processor 1001 may be configured to perform step S102 in FIG. 8, and/or configured to perform another process of the technology described in this specification; and the transceiver 1002 may be configured to perform step S101 in FIG. 8, and/or configured to perform another process of the technology described in this specification.

For example, when the communication apparatus is configured to perform the steps, methods, or functions performed by the second communication apparatus in the foregoing method embodiment shown in FIG. 8, the processor 1001 may be configured to perform step S103 in FIG. 8, and/or configured to perform another process of the technology described in this specification; and the transceiver 1002 may be configured to receive the sensing control information, and/or configured to perform another process of the technology described in this specification.

For example, when the communication apparatus is configured to perform the steps, methods, or functions performed by the first communication apparatus in the foregoing method embodiment shown in FIG. 13, the processor 1001 may be configured to perform step S201 in FIG. 13, and/or configured to perform another process of the technology described in this specification; and the transceiver 1002 may be configured to perform step S202 in FIG. 13, and/or configured to perform another process of the technology described in this specification.

For example, when the communication apparatus is configured to perform the steps, methods, or functions performed by the second communication apparatus in the foregoing method embodiment shown in FIG. 13, the processor 1001 may be configured to perform step S203 in FIG. 13, and/or configured to perform another process of the technology described in this specification; and the transceiver 1002 may be configured to receive the CIR report information element, and/or configured to perform another process of the technology described in this specification.

In any one of the foregoing designs, the processor 1001 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1001 may store instructions, the instructions may be a computer program, and the computer program is run on the processor 1001, to enable the communication apparatus to perform the methods described in the foregoing method embodiments. The computer program may be solidified in the processor 1001. In this case, the processor 1001 may be implemented by hardware.

In an implementation, the communication apparatus may include a circuit. The circuit may implement the sending, receiving, or communication function in the foregoing method embodiment. The processor and the transceiver described in this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

It may be understood that the communication apparatus shown in embodiments of this application may alternatively include more components than those shown in FIG. 17, or the like. This is not limited in embodiments of this application. The foregoing method performed by the processor and the transceiver is merely an example. For specific steps performed by the processor and the transceiver, refer to descriptions in the foregoing method embodiments.

In another possible implementation, in the communication apparatus shown in FIG. 16, the processing unit 20 may be one or more logic circuits, and the transceiver unit 10 may be an input/output interface, or may also be referred to as a communication interface, an interface circuit, an interface, or the like. Alternatively, the transceiver unit 10 may be a sending unit and a receiving unit. The sending unit may be an output interface, and the receiving unit may be an input interface. The sending unit and the receiving unit are integrated into one unit, for example, an input/output interface. FIG. 18 is a diagram of another structure of a communication apparatus according to an embodiment of this application. As shown in FIG. 18, the communication apparatus shown in FIG. 18 includes a logic circuit 901 and an interface 902. That is, the processing unit 20 may be implemented via the logic circuit 901, and the transceiver unit 10 may be implemented via the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 18 shows an example in which the communication apparatus is a chip. The chip includes the logic circuit 901 and the interface 902.

In this embodiment of this application, the logic circuit and the interface may be coupled to each other. A specific manner of a connection between the logic circuit and the interface is not limited in embodiments of this application.

For example, when the communication apparatus is configured to perform the method, the function, or the step performed by the first communication apparatus in the embodiment shown in FIG. 8, the interface 902 is configured to input the sensing control information, and the logic circuit 901 is configured to determine a channel based on the sensing control information.

For example, when the communication apparatus is configured to perform the method, the function, or the step performed by the second communication apparatus in the embodiment shown in FIG. 8, the interface 902 is configured to output the sensing control information, and the logic circuit 901 is configured to determine a channel based on the sensing control information.

In this embodiment of this application, for specific descriptions of the sensing control information, the channel determined based on the sensing control information, and the like, refer to the method embodiment shown in FIG. 8. Details are not described herein again.

For example, when the communication apparatus is configured to perform the method, the function, or the step performed by the first communication apparatus in the embodiment shown in FIG. 13, the logic circuit 901 is configured to generate the CIR report information element, and the interface 902 is configured to output the CIR report information element.

For example, when the communication apparatus is configured to perform the method, the function, or the step performed by the second communication apparatus in the embodiment shown in FIG. 13, the interface 902 is configured to input the CIR report information element, and the logic circuit 901 is configured to process the CIR report information element to obtain Q CIR reports.

In embodiments of this application, for specific descriptions of the CIR report information element, the CIR report, and the like, refer to the method embodiment shown in FIG. 13. Details are not described herein again.

It may be understood that the communication apparatus shown in embodiments of this application may implement the method provided in embodiments of this application in a form of hardware, or may implement the method provided in embodiments of this application in a form of software, or the like. This is not limited in embodiments of this application.

For a specific implementation of the embodiment shown in FIG. 18, refer to the foregoing embodiments. Details are not described herein again.

An embodiment of this application further provides a communication system. The wireless communication system includes a first communication apparatus and a second communication apparatus. The first communication apparatus and the second communication apparatus may be configured to perform the method in any one of the foregoing method embodiments.

In addition, this application further provides a computer program. The computer program is for implementing operations and/or processing performed by the first communication apparatus in the methods provided in this application.

This application further provides a computer program. The computer program is for implementing operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium. The computer-readable storage medium stores computer code. When the computer code is run on a computer, the computer is enabled to perform operations and/or processing performed by the second communication apparatus in the method provided in this application.

This application further provides a computer program product. The computer program product includes computer code or a computer program. When the computer code or the computer program is run on a computer, operations and/or processing performed by the first communication apparatus in the methods provided in this application are/is performed.

This application further provides a computer program product. The computer program product includes computer code or a computer program. When the computer code or the computer program is run on a computer, operations and/or processing performed by the second communication apparatus in the methods provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effect of the solutions provided in embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information exchange method in an ultra-wideband system, comprising:

   receiving sensing control information, wherein the sensing control information comprises a frequency stitching direction field, a base channel field, a carrier frequency grid field, and a number of transmissions field; and
   determining a channel based on the sensing control information, wherein
   the channel satisfies:

   $$N_i = N_{base} + l_i \times (4 - OF) \times (2 \times D - 1),$$

   wherein
   $N_i$ represents a channel number of a channel corresponding to an $i^{th}$ logical index $l_i$ in a channel use order, a value of $l_i$ ranges from 0 to (M - 1), M represents a total number of frequency bands for frequency stitching indicated by the number of transmissions field, $N_{base}$ represents a channel number of a base channel indicated by the base channel field, OF represents a value of the carrier frequency grid field, and D represents a value of the frequency stitching direction field.

2. An information exchange method in an ultra-wideband system, comprising:

   receiving sensing control information, wherein the sensing control information comprises a frequency stitching direction field, a base channel field, a carrier frequency grid field, and a number of transmissions field; and
   determining a channel based on the sensing control information, wherein
   the channel satisfies:

   $$f_i = f_{base} + 124.8 \times l_i \times (4 - OF) \times (2 \times D - 1),$$

   wherein
   $f_i$ represents a center frequency of a channel corresponding to an $i^{th}$ logical index $l_i$ in a channel use order, a value of $l_i$ ranges from 0 to (M - 1), M represents a total number of frequency bands for frequency stitching indicated by the number of transmissions field, a unit of $f_i$ is megahertz, $f_{base}$ represents a center frequency of a base channel indicated by the base channel field, the center frequency of the base channel corresponds to a channel number of the base channel, OF represents a value of the carrier frequency grid field, and D represents a value of the frequency stitching direction field.

3. The method according to claim 1 or 2, wherein the sensing control information further comprises a channel sequence order field, and the channel sequence order field indicates that an order for transmitting channels for frequency stitching is an out-of-sequence channel order; and

the channel use order satisfies:

$$\text{CH}(l_i) = \text{CH}((p \times (OF + 1) \text{ MOD } (N)) + (p \times (OF + 1) \text{ DIV } (N))),$$

wherein
$l_i$ represents the i$^{th}$ logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

4. The method according to any one of claims 1 to 3, wherein the method further comprises:

sending a channel impulse response CIR report information element, wherein the CIR report information element comprises an antennas field, first indication information, and Q receive report fields; and
one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information.

5. The method according to claim 4, wherein an arrangement order of the CIR reports in the CIR report information element comprises:
first traversing a CIR report corresponding to an antenna and then traversing a CIR report corresponding to a sensing segment; or first traversing a CIR report corresponding to a sensing segment and then traversing a CIR report corresponding to an antenna.

6. The method according to claim 4 or 5, wherein the CIR report information element further comprises second indication information, and the second indication information indicates the arrangement order of the CIR reports in the CIR report information element.

7. The method according to claim 4 or 5, wherein before sending the channel impulse response CIR report information element, the method further comprises:
receiving or sending second indication information, wherein the second indication information indicates the arrangement order of the CIR reports in the CIR report information element.

8. An information exchange method in an ultra-wideband system, comprising:

sending sensing control information, wherein the sensing control information comprises a frequency stitching direction field, a base channel field, a carrier frequency grid field, and a number of transmissions field; and
determining a channel based on the sensing control information, wherein
the channel satisfies:

$$N_i = N_{base} + l_i \times (4 - OF) \times (2 \times D - 1),$$

wherein
$N_i$ represents a channel number of a channel corresponding to an i$^{th}$ logical index $l_i$ in a channel use order, a value of $l_i$ ranges from 0 to (M - 1), M represents a total number of frequency bands for frequency stitching indicated by the number of transmissions field, $N_{base}$ represents a channel number of a base channel indicated by the base channel field, OF represents a value of the carrier frequency grid field, and D represents a value of the frequency stitching direction field.

9.  An information exchange method in an ultra-wideband system, comprising:

> sending sensing control information, wherein the sensing control information comprises a frequency stitching direction field, a base channel field, a carrier frequency grid field, and a number of transmissions field; and
> determining a channel based on the sensing control information, wherein
> the channel satisfies:

$$f_i = f_{base} + 124.8 \times l_i \times (4 - OF) \times (2 \times D - 1),$$

> wherein
> $f_i$ represents a center frequency of a channel corresponding to an $i^{th}$ logical index $l_i$ in a channel use order, a value of $l_i$ ranges from 0 to (M - 1), M represents a total number of frequency bands for frequency stitching indicated by the number of transmissions field, a unit of $f_i$ is megahertz, $f_{base}$ represents a center frequency of a base channel indicated by the base channel field, the center frequency of the base channel corresponds to a channel number of the base channel, OF represents a value of the carrier frequency grid field, and D represents a value of the frequency stitching direction field.

10. The method according to claim 8 or 9, wherein the sensing control information further comprises a channel sequence order field, and the channel sequence order field indicates that an order for transmitting channels for frequency stitching is an out-of-sequence channel order; and

> the channel use order satisfies:

$$CH(l_i) = CH((p \times (OF + 1) \text{ MOD } (N)) + (p \times (OF + 1) \text{ DIV } (N))),$$

> wherein
> $l_i$ represents the $i^{th}$ logical index, i = (p + 1), and a value of p is 0, 1, 2, ..., (N - 1); if M is an integer multiple of (OF + 1), N is equal to M, or if M is not an integer multiple of (OF + 1), N is a smallest integer multiple of (OF + 1) in a positive integer greater than M; MOD represents a modulo operation; and DIV represents integer division.

11. The method according to any one of claims 8 to 10, wherein the method further comprises:

> receiving a channel impulse response CIR report information element, wherein the CIR report information element comprises an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and
> processing the CIR report element to obtain Q CIR reports.

12. The method according to claim 11, wherein an arrangement order of the CIR reports in the CIR report information element comprises:
> first traversing a CIR report corresponding to an antenna and then traversing a CIR report corresponding to a sensing segment; or first traversing a CIR report corresponding to a sensing segment and then traversing a CIR report corresponding to an antenna.

13. The method according to claim 11 or 12, wherein the CIR report information element further comprises second indication information, and the second indication information indicates the arrangement order of the CIR reports in the CIR report information element.

14. The method according to claim 11 or 12, wherein before receiving the channel impulse response CIR report information element, the method further comprises:
> sending or receiving second indication information, wherein the second indication information indicates the arrangement order of the CIR reports in the CIR report information element.

15. An information exchange method in an ultra-wideband system, comprising:

generating a channel impulse response CIR report information element, wherein the CIR report information element comprises an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and
sending the CIR report information element.

16. The method according to claim 15, wherein an arrangement order of CIR reports in the CIR report information element comprises:
first traversing a CIR report corresponding to an antenna and then traversing a CIR report corresponding to a sensing segment or a sensing packet; or first traversing a CIR report corresponding to a sensing segment or a sensing packet and then traversing a CIR report corresponding to an antenna.

17. The method according to claim 15 or 16, wherein the CIR report information element further comprises second indication information, and the second indication information indicates the arrangement order of the CIR reports in the CIR report information element.

18. The method according to claim 15 or 16, wherein before sending the CIR report information element, the method further comprises:
receiving or sending second indication information, wherein the second indication information indicates the arrangement order of the CIR reports in the CIR report information element.

19. An information exchange method in an ultra-wideband system, comprising:

receiving a channel impulse response CIR report information element, wherein the CIR report information element comprises an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information; and
processing the CIR report information element to obtain Q CIR reports.

20. The method according to claim 19, wherein an arrangement order of the CIR reports in the CIR report information element comprises:
first traversing a CIR report corresponding to an antenna and then traversing a CIR report corresponding to a sensing segment or a sensing packet; or first traversing a CIR report corresponding to a sensing segment or a sensing packet and then traversing a CIR report corresponding to an antenna.

21. The method according to claim 19 or 20, wherein the CIR report information element further comprises second indication information, and the second indication information indicates the arrangement order of the CIR reports in the CIR report information element.

22. The method according to claim 19 or 20, wherein before receiving the channel impulse response CIR report information element, the method further comprises:
sending or receiving second indication information, wherein the second indication information indicates the arrangement order of the CIR reports in the CIR report information element.

23. A communication apparatus, comprising a unit or a module configured to perform the method according to any one of claims 1 to 22.

24. A communication apparatus, comprising a processor and an interface circuit, wherein the interface circuit is configured to: receive a signal from another communication apparatus and transmit the signal to the processor, or send a signal from the processor to another communication apparatus, and the processor is configured to implement the method according to any one of claims 1 to 22 through a logic circuit or by executing code instructions.

25. A readable storage medium, configured to store a program, wherein the program is executed by one or more processors, to enable an apparatus comprising the one or more processors to perform the method according to any one of claims 1 to 22.

26. A communication system, comprising: a communication apparatus configured to perform the method according to any one of claims 1 to 7, and a communication apparatus configured to perform the method according to any one of claims 8 to 14; or

a communication apparatus configured to perform the method according to any one of claims 15 to 18, and a communication apparatus configured to perform the method according to any one of claims 19 to 22.

Full-function device

Reduced-function device

PAN coordinator

FIG. 1

Full-function device

Reduced-function device

PAN coordinator

FIG. 2

Control on a main UWB channel
control on a main UWB channel

Frequency
frequency

CM    SF    SF    SF

Time
time

FIG. 3a

Control on all UWB channels
control on all UWB channels

Frequency
frequency

| | | | | CM | SF |
| CM | SF | CM | SF | | |

Time
time

FIG. 3b

Dedicated control channel
dedicated control channel
(for example: narrowband PHY
narrowband physical layer)

CM

Frequency
frequency

| | | SF |
| | SF | |
| SF | | |

Time
time

FIG. 3c

| Bit: 0 | Bit: 1 | Bit: 2 | Bits: 3 to 7 | Octet: 0/1 | Octet: 0/variable | Octet: 0/variable |
|---|---|---|---|---|---|---|
| Common sensing control present<br>common sensing control present | CIR report parameters present<br>CIR report parameters present | Frequency stitching parameters present<br>frequency stitching parameters present | Reserved<br>reserved | Common sensing control<br>common sensing control | CIR report parameters<br>CIR report parameters | Frequency stitching parameters<br>frequency stitching parameters |

Bits: bits
Octets: octets
Variable: variable

FIG. 4

EP 4 765 934 A1

| Bit: 0 | Bits: 1 to 4 | Bits: 5 and 6 | Bit: 7 | Bits: 8 to 11 | Bits: 12 and 13 | Bits: 14 and 15 |
|---|---|---|---|---|---|---|
| Frequency stitching direction frequency stitching direction | Base channel base channel | Carrier frequency grid carrier frequency grid | Channel sequence order channel sequence order | Number of transmissions number of transmissions | Feedback control feedback control | Reserved reserved |

FIG. 5

EP 4 765 934 A1

FIG. 6

FIG. 7

| Second communication apparatus sensing initiator | First communication apparatus sensing responder |
|---|---|

S101: Send sensing control information, where the sensing control information includes a frequency stitching direction field, a base channel field, a carrier frequency grid field, and a number of transmissions field

S102: Determine a channel based on the sensing control information

S103: Determine the channel based on the sensing control information

## FIG. 8

| Bits: 0 and 1 | Bits: 2 and 3 | Bits: 4 to 13 | Bits: 14 and 15 | Octet: 4/8/16/32 | Octet: variable |
|---|---|---|---|---|---|
| Antennas antennas | Bitmap length bitmap length | Bitmap offset bitmap offset | Reserved reserved | CIR bitmap CIR bitmap | Receive report(s) receive reports |

Bits: bits
Octets: octets
Variable: variable

## FIG. 9

| Bits: 0 to 5 | Bits: 6 to 9 | Bits: 10 to 15 | Octet: 1 | Octet: variable |
|---|---|---|---|---|
| Timing offset timing offset | Normalization factor normalization factor | Reserved reserved | RSSI received signal strength indicator | CIR taps CIR taps |

Bits: bits
Octets: octets
Variable: variable

## FIG. 10

| SENS0 | SYNC synchronization | SFD start-of-frame delimiter | SENS sensing | | | Mandatory mandatory |

| SENS1 | SYNC synchronization | SFD start-of-frame delimiter | SENS sensing | PHR physical layer header | Payload payload | Optional optional |

| SENS2 | SYNC synchronization | SFD start-of-frame delimiter | PHR physical layer header | Payload payload | SENS sensing | Optional optional |

FIG. 11

| Gap<br>gap | SENS segment<br>sensing segment | Gap<br>gap | SENS segment<br>sensing segment | Gap<br>gap | SENS segment<br>sensing segment | Gap<br>gap | SENS segment<br>sensing segment | Gap<br>gap |
| --- | --- | --- | --- | --- | --- | --- | --- | --- |

FIG. 12

39

First communication apparatus

Second communication apparatus

S201: Generate a CIR report information element, where the CIR report information element includes an antennas field, first indication information, and Q receive report fields, one receive report field indicates one CIR report, a value of the antennas field plus 1 represents a number of antennas corresponding to CIR reports that need to be fed back, the first indication information indicates a number of sensing segments in one sensing packet or indicates a number of sensing segments corresponding to the CIR reports that need to be fed back, and Q is equal to a product of the number of antennas and the number of sensing segments indicated by the first indication information

S202: Send the CIR report information element

S203: Process the CIR report information element to obtain Q CIR reports

FIG. 13

| Bits: 0 and 1 | Bits: 2 and 3 | Bits: 4 to 13 | Bits: 14 and 15 | Octet: 4/8/16/32 | Octet: variable |
|---|---|---|---|---|---|
| Antennas antennas | Bitmap length bitmap length | Bitmap offset bitmap offset | Number of segments number of segments | CIR bitmap CIR bitmap | Receive report receive report |

Bits: bits
Octets: octets
Variable: variable

FIG. 14

| Ant 1 Seg 1 CIR | Ant 1 Seg 2 CIR | Ant 1 Seg 3 CIR | Ant 1 Seg 4 CIR |
|---|---|---|---|

| Ant 2 Seg 1 CIR | Ant 2 Seg 2 CIR | Ant 2 Seg 3 CIR | Ant 2 Seg 4 CIR |
|---|---|---|---|

| Ant 3 Seg 1 CIR | Ant 3 Seg 2 CIR | Ant 3 Seg 3 CIR | Ant 3 Seg 4 CIR |
|---|---|---|---|

| Ant 4 Seg 1 CIR | Ant 4 Seg 2 CIR | Ant 4 Seg 3 CIR | Ant 4 Seg 4 CIR |
|---|---|---|---|

FIG. 15

Transceiver unit — 10

Processing unit — 20

Communication apparatus

FIG. 16

Communication apparatus

Processor 1001

Instructions

Memory 1003

Instructions

Transceiver 1002

Control circuit

Antenna

FIG. 17

Chip

Logic circuit 901

Interface 902

FIG. 18

## INTERNATIONAL SEARCH REPORT

| | |
|---|---|
| | International application No. |
| | **PCT/CN2024/117060** |

### A. CLASSIFICATION OF SUBJECT MATTER

H04W 24/08(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, ENTXTC, DWPI, ENTXT, 3GPP: 报告, 感知控制, 拼接, 频带, 频带拼接, 信道, 信道冲击响应, 字段, CIR, channel impulse response, reporting, perceptual control, stitching, band, band stitching, channel

### C. DOCUMENTS CONSIDERED TO BE RELEVANT

| Category* | Citation of document, with indication, where appropriate, of the relevant passages | Relevant to claim No. |
|---|---|---|
| A | CN 116074884 A (HUAWEI TECHNOLOGIES CO., LTD.) 05 May 2023 (2023-05-05) description, paragraphs 162-179 and 208-211 | 1-26 |
| A | CN 115632727 A (PENGCHENG LAB et al.) 20 January 2023 (2023-01-20) entire document | 1-26 |
| A | US 2022171046 A1 (ROBERT BOSCH GMBH) 02 June 2022 (2022-06-02) entire document | 1-26 |
| A | WO 2023087192 A1 (GUANGDONG OPPO MOBILE TELECOMMUNICATIONS CORP., LTD.) 25 May 2023 (2023-05-25) entire document | 1-26 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **05 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/117060**

| Patent document cited in search report | | | Publication date (day/month/year) | Patent family member(s) | | | Publication date (day/month/year) |
|---|---|---|---|---|---|---|---|
| CN | 116074884 | A | 05 May 2023 | WO | 2023072130 | A1 | 04 May 2023 |
| | | | | EP | 4412296 | A1 | 07 August 2024 |
| | | | | SG | 11202402901 | A | 31 May 2024 |
| CN | 115632727 | A | 20 January 2023 | WO | 2024056083 | A1 | 21 March 2024 |
| US | 2022171046 | A1 | 02 June 2022 | | None | | |
| WO | 2023087192 | A1 | 25 May 2023 | CN | 118140588 | A | 04 June 2024 |
| | | | | US | 2024306020 | A1 | 12 September 2024 |

Form PCT/ISA/210 (patent family annex) (July 2022)

**EP 4 765 934 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311157465